# EUROPEAN PATENT APPLICATION

(11) **EP 1 507 383 A2**
(43) Date of publication of application: **16.02.2005**
(21) Application number: 04254835.4
(22) Date of filing: 11.08.2004
(51) Int. Cl.: H04L 29/06

(54) **Information distribution system, terminal apparatus, server apparatus, information distibution method, and program for terminal apparatus**

(30) Priority: 13.08.2003 JP 2003292705
(71) Applicant: Sony Corporation, Tokyo 141-0001 (JP)
(72) Inventor: Yasuda, Ryohei, Shinagawa-ku Tokyo (JP)
(74) Representative: Smith, Samuel Leonard

(57) **Abstract**

A terminal apparatus accepts information for specifying desired reception time (start time) from a user via a key operation section. By using the information specifying the desired reception time and the current time provided by a clock circuit, a control section in the terminal apparatus detects the arrival of the desired reception time. Upon detecting the arrival of the desired reception time, the control section generates a distribution request for demo data and transmits the request to a distribution server apparatus via a communication section. The control section then receives demo data distributed from the distribution server apparatus and stores the demo data in its storage device section, so that the demo data is made available for use.

## Description

The present invention relates to a system, a method, apparatuses, and a program for distributing various types of data, such as audio data, image data, and text data, through a wide-area communications network, such as the Internet, or a local-area communications network, such as a LAN.

For example, a content distribution service is available which has a content server apparatus, in which content is accumulated, on a communications network, such as the Internet, so that terminal apparatuses, such as mobile phone terminals and personal computers having a communication function, access the distribution server apparatus to receive and use intended content data distributed therefrom.

Various types of content data for distribution are available, including music data, moving-image data for movies and so on, still-image data for pictures and so on, text data for novels and papers, and program data for game software, application software, and so on. The content data are typically distributed on a pay basis, except for free distribution of sample data. Payments are made by various systems, such as payment processing using credit-card numbers.

In a system that provides such a distribution service, as described above, a terminal apparatus accesses a distribution server apparatus through a communications network to transmit to the distribution server a request for supply of intended content data, and the distribution server immediately distributes the requested data to the requesting terminal apparatus. Upon receiving the intended content data supplied from the distribution server apparatus, the terminal apparatus can use the content data.

However, as described above, when the distribution server apparatus immediately distributes content data every time it receives a content-data supply request from the terminal apparatus, some drawbacks may arise due to the congestion of the communications path. For example, it can take a long time to transmit/receive content data, and in the worst case, it is impossible to properly transmit/receive entire content data. Accordingly, Patent Document 1 (Japanese Unexamined Patent Application Publication No. 2002-123446) discloses a system in which a distribution server apparatus estimates a time period in which a communications path is available and distributes content in the estimated time period.

In the case of the system disclosed in Patent Document 1, the distribution server, which accepts distribution requests from a large number of terminal apparatuses, controls distribution time, so as to efficiently distribute content data while avoiding a time period in which the communications path is congested. However, since the distribution server apparatus controls the distribution time, this can cause inconvenience for the user of each terminal.

For example, during late night hours, a less number of terminal apparatuses are used, so that the number of opportunities for communication is also less. Thus, it can easily be presumed that the communications line has more capacity during late-night hours. Thus, one typical approach is to distribute content data during a late-night period of time. However, users who are more likely to use their terminal apparatuses during a late-night period of time do not prefer to receive content data distributed during that period of time.

That is, even when the distribution server apparatus is adapted to specify the distribution schedule time of content data, based on a past distribution history or the like, the terminal apparatus to which the content data is to be distributed is not always in a state in which it can receive the content data distributed at the specified distribution schedule time.

In general, during a time period set by a distribution server apparatus, in some cases, content data distributed from the distribution server apparatus cannot be received since the terminal apparatus is in use for various reasons during that time period.

Accordingly, the distribution server apparatus may be adapted to manage the usage schedules of all terminal apparatuses that receive content data distributed. In such a case, the distribution server apparatus manages the available time of each terminal apparatus to allow the distribution of content data during the available time of each terminal apparatus.

In such a case, however, there is a need to collect usage schedule information (operation schedule information) of the respective terminal apparatuses from all terminal apparatuses that could receive content data to be distributed, thereby increasing the load of the distribution server apparatus. In addition, when the usage schedule of the terminal apparatus is changed, for example, the terminal apparatus needs to notify the distribution server of the change in the usage-schedule, thus requiring complicated procedures.

In view of the foregoing situations, an object of the present invention is to provide a system, a method, apparatuses, and a program for allowing each terminal apparatus to receive content data distributed at time appropriate for the use pattern of each user.

To achieve the object, a first aspect of the present invention provides an information distribution system in which, in accordance with a request from at least one terminal apparatus connected to a distribution server apparatus through a communications network, the distribution server apparatus distributes distribution information to the requesting terminal apparatus. The terminal apparatus includes accepting means for accepting entry of information for specifying desired distribution time; current-time providing means for providing current time; detecting means for detecting arrival of the desired distribution time, in accordance with the desired-distribution-time specifying information accepted by the accepting means and the current time provided by the current-time providing means; request-transmitting means for generating a distribution request and transmitting the distribution request to the distribution server apparatus through the communications network, when the detecting means detects the arrival of the desired distribution time; information-receiving means for receiving distribution information transmitted from the distribution server apparatus; and storing means for storing the distribution information received by the information-receiving means. The distribution server apparatus includes distribution-information accumulating means for accumulating distributable information; request-receiving means for receiving the distribution request from the terminal apparatus; retrieving means for retrieving distribution information to be distributed from the distribution-information accumulating means, in accordance with the distribution request received via the request-receiving means; and information-transmitting means for transmitting the distribution information retrieved by the retrieving means to the terminal apparatus through the communications network.

In the information distribution system according to the first aspect of the present invention, the terminal apparatus receives accepts information for specifying desired distribution time from the user via the accepting means. In accordance with the start-up information, i.e., the information specifying the desired distribution information, and the current time provided by the current time providing means, the detecting means detects the arrival of the desired distribution time. When the detecting means detects the arrival of the desired distribution time, the terminal apparatus generates a distribution request for content data and transmits the distribution request to the distribution server apparatus via the request-transmitting means.

The distribution server apparatus then receives the distribution request from the terminal apparatus via the request-receiving means. In accordance with the distribution request, the retrieving means retrieves distribution information corresponding to the distribution request from the distribution-information accumulating means. The distribution server apparatus transmits the retrieved distribution information to the requesting terminal apparatus via the information-transmitting means. The terminal apparatus then receives the distribution information from the distribution server apparatus via the information-receiving means and the storing means of the terminal apparatus stores the distribution information.

With this arrangement, the user of each terminal apparatus can register time or a time period which is the most convenient for his/her terminal apparatus to receive distribution information (i.e., content data) as information specifying desired reception time, considering the use state of his/her terminal apparatus. Then, the terminal apparatus is automatically started at time corresponding to the registered time or time period to generate and transmit a distribution request, and can receive intended distribution information.

According to the present invention, each terminal apparatus can generate a distribution request at a convenient time and transmit the request to the distribution server apparatus, and thus can receive distribution information. Since the use patterns of terminal apparatuses differ from each other depending on individual users, the transmission time of distribution requests can be distributed to different time periods to prevent distribution congestion of the distribution requests and content data.

Embodiments of the invention will now be described, by way of example only, with reference to the accompanying drawings in which:
FIG. 1 is a schematic view illustrating an information distribution system according to one embodiment of the present invention;
FIG. 2 is a block diagram illustrating distribution-service-compatible terminal equipment (a terminal apparatus) in the information distribution system shown in FIG. 1;
FIG. 3 is a block diagram illustrating a distribution server apparatus in the information distribution system shown in FIG. 1;
FIG. 4 is a view illustrating one example of an entry screen for setting a desired reception time and so on;
FIG. 5 is a view illustrating one example of a distribution request;
FIG. 6 is a sequence diagram illustrating a first example of the operation of the information distribution system shown in FIG. 1;
FIG. 7 is a flow chart illustrating processing of a terminal apparatus and a distribution server apparatus in the first example of the operation shown in FIG. 6;
FIG. 8 is a sequence diagram illustrating a second example of the operation of the information distribution system shown in FIG. 1;
FIG. 9 is a flow chart illustrating the processing of the terminal apparatus in the second example of the operation shown in FIG. 8;
FIG. 10 is a sequence diagram illustrating a third example of the operation of the information distribution system shown in FIG. 1;
FIG. 11 is a flow chart illustrating the processing of the terminal apparatus in the third example of the operation shown in FIG. 10;
FIG. 12 is a flow chart illustrating the processing of the distribution server apparatus in the third example of the operation shown in FIG. 10;
FIG. 13 is a block diagram illustrating another example of the configuration of the distribution server apparatus in the information distribution system shown in FIG. 1;
FIG. 14 is a sequence diagram illustrating a fourth example of the operation of the information distribution system shown in FIG. 1;
FIG. 15 is a flow chart illustrating the processing of the distribution server apparatus in the fourth example of the operation shown in FIG. 14;
FIG. 16 is a table illustrating schedule processing performed by the distribution server apparatus shown in FIG. 13; and
FIG. 17 is a view illustrating a time-setting request transmitted from the distribution server apparatus shown in FIG. 13 to the terminal apparatus.

A system, a method, apparatuses, and a program according to one embodiment of the present invention will now be described with reference to the accompanying drawings. The description below will be given, by way of example, of an information distribution system implemented through a wide-area communications network, such as the Internet, in conjunction with a case in which music data for various pieces of music are distributed as content data.

### Overview of Information Distribution System

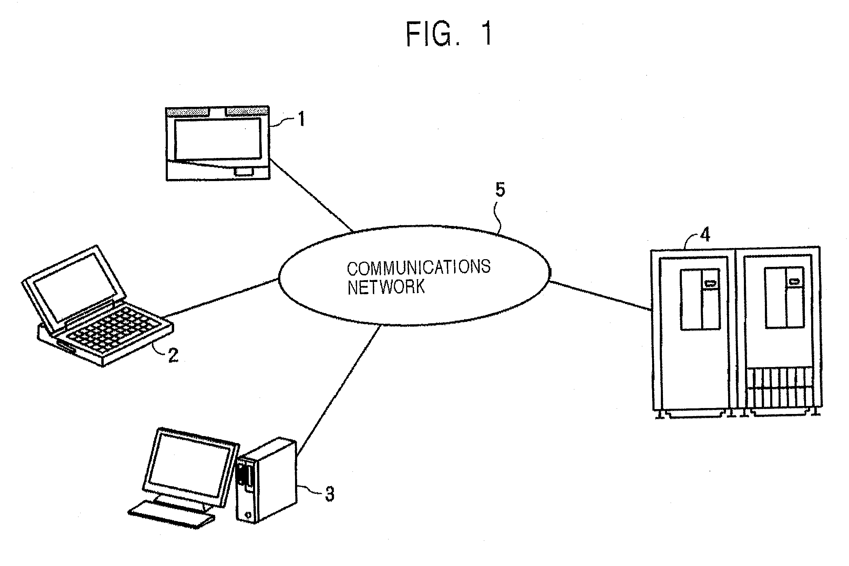

FIG. 1 is a view illustrating an information distribution system according the present embodiment. An information distribution system and an information distribution method according to the present invention are applied to the information distribution system of the present embodiment shown in FIG. 1. As shown in FIG, 1, in the information distribution system of the present embodiment, distribution-service-compatible terminal apparatuses (hereinafter simply referred to as "terminal apparatuses") 1, 2, and 3, which are used by end users (hereinafter simply referred to as "users"), and a distribution server apparatus 4 are connected through a communications network 5.

Terminal apparatuses according to the present invention are applied to the terminal apparatuses 1, 2, and 3. A distribution server apparatus according to the present invention is applied to the distribution server apparatus 4. The communications network 5 may be the so-called "wide-area communications network", such as the Internet or a public-telephone line network.

In the present embodiment, the distribution server apparatus 4 accumulates music data for a large number of pieces of music and can distribute the accumulated music data to the users' terminal apparatuses through the communications network 5. In the present embodiment, the music-data distribution service offered by the distribution server apparatus 4 is essentially a fee-based service, and the payment therefor can be made by a method using a credit-card number or another method.

Further, in order to ensure that the user can receive desired music data, the distribution server apparatus 4 can prepare sample-music data (hereinafter referred to as "demo data"), which allows the user to listen to part of a piece of distributable music, and can distribute the demo data, for example, for free of charge. Appropriate maintenance is performed on demo data. For example, demo data for a piece of music that has become available for distribution is added to the existing demo data as needed and demo data for a piece of music whose distribution has been suspended due to lack of popularity is deleted.

In the specification, as described above, of distribution information that can be distributed by the distribution server apparatus 4, music data for an entire piece of music is simply referred to as "music data", and the music data that is used for previewing and that is part of music data for an entire piece of music is referred to as "demo data".

In the information distribution system in the present embodiment, the terminal apparatuses 1, 2, and 3 can each connects a corresponding communications line with the distribution server apparatus 4 to receive intended demo data and/or music data distributed from the distribution server apparatus 4. Each of the terminal apparatuses 1, 2, and 3 then stores the received data in its own storage section, so that the user can reproduce and use the data.

The terminal apparatus 1 is an apparatus that is dedicated to the information distribution system in the present embodiment. Specifically, the terminal apparatus 1 includes a communication function for communicating with the distribution server apparatus 4, a request generation function for generating a distribution request and the like to be transmitted to the distribution server apparatus 4, a music-data accumulation function for accumulating music data distributed from the distribution server apparatus 4, and a music-data reproduction function for reproducing the accumulated music data.

The terminal apparatus 2 may be so-called "mobile equipment", such as a portable PDA (personal digital assistant) or a notebook personal computer. In addition to general functions of mobile equipment, the terminal apparatus 2 also has functions of a terminal apparatus for the information distribution system of the present embodiment, similarly to the terminal apparatus 1.

That is, the terminal apparatus 2 has information processing functions, such as creating and managing various data, such address-book data and schedule data, and creating and managing document information. Further, in order to receive and use music data distributed from the distribution server apparatus 4, the terminal apparatus 2 has a communication function, a request generation function, a music-data accumulation function, and a music-data reproduction function, similarly to the above-described terminal apparatus 1.

The terminal apparatus 3 may be the so-called "desktop personal computer", which is placed and used at home and so on. In addition to typical functions of a personal computer, the terminal apparatus 3 has functions of a terminal apparatus for the information distribution system of the present embodiment, similarly to the terminal apparatus 1.

That is, by creating a program and executing the program or executing various application programs, the terminal apparatus 3 can perform various intended processing, such as document creation, table calculation, account processing, sales-management processing, and inventory-management processing. Further, in order to receive and use music data distributed from the distribution server apparatus 4, the distribution server apparatus 4 has a communication function, a request generation function, a music-data accumulation function, and a music-data reproduction function, similarly to the terminal apparatus 1 described above.

A time period during which each of the terminal apparatuses 1, 2, and 3 of the present embodiment is not used can be registered therein as a desired reception time period or desired distribution time period (hereinafter simply referred to as a "desired reception time period") for demo data. By doing so, during the desired reception time period, each of the terminal apparatuses 1, 2, and 3 can request the distribution server apparatus 4 for the distribution of demo data, receive the demo data distributed therefrom, and accumulate the demo data. With such an arrangement, the users of the terminal apparatuses 1, 2, and 3 can promptly reproduce the demo data, which are accumulated in response to the distribution, to listen thereto at respective appropriate times.

The terminal apparatuses 1, 2, and 3 can have totally different time periods for the desired reception time periods for the demo data. For example, suppose that the terminal apparatus 1 is not used in a late-night time period of 1 a.m. to 3 a.m., the terminal apparatus 2 is not used in an early-morning time period of 4 a.m. to 8 a.m., and the terminal apparatus 3 is not used in a daytime period of 9 a.m. to 5 p.m. when the user is away from home.

In such a case, a late-night time period of 1 a.m. to 3 a.m. can be set as a desired reception time period for the terminal 1, an early-morning time period of 4 a.m. to 8 a.m. can be set as a desired reception time period for the terminal 2, and a daytime period of 9 a.m. to 5 p.m. can be set as a desired reception time period for the terminal apparatus 3.

That is, the most suitable time period is set for each terminal apparatus to receive demo data distributed from the distribution server apparatus 4 and is managed by the terminal apparatus. This allows each terminal apparatus to receive demo data distributed during its most suitable time period. Such an arrangement can also avoid a load more than required from being put on the distribution server apparatus 4 during the distribution of demo data.

Three apparatuses, i.e., the terminal apparatuses 1, 2, and 3, are shown in FIG. 1 for simplicity of illustration, but, in practice, a large number of terminal apparatuses are connected to the distribution server apparatus 4 in an accessible manner through the communications network 5. While only one distribution server apparatus 4 is shown in FIG. 1, a plurality of distribution server apparatus having an analogous configuration and function can also be provided.

### Basic Configuration and Operation of Terminal Apparatus

A description will now be given of terminal apparatuses for use in the information distribution system of the present embodiment. In the present embodiment, as shown in FIG. 1, various types of terminal apparatuses can be used, including the dedicated terminal 1, the mobile terminal 2, and the personal computer 3.

With any terminal apparatuses, the configurations thereof for use as the terminal apparatuses in the information distribution system are essentially the same. Thus, the configuration and the operation of the terminal apparatus 1, which is implemented as a dedicated terminal for the information distribution system, will hereinafter be described, and the descriptions for those of the terminal apparatuses 2 and 3 are omitted on the assumption that the they have similar configurations to the terminal apparatus 1 as terminal apparatuses for the information distribution system.

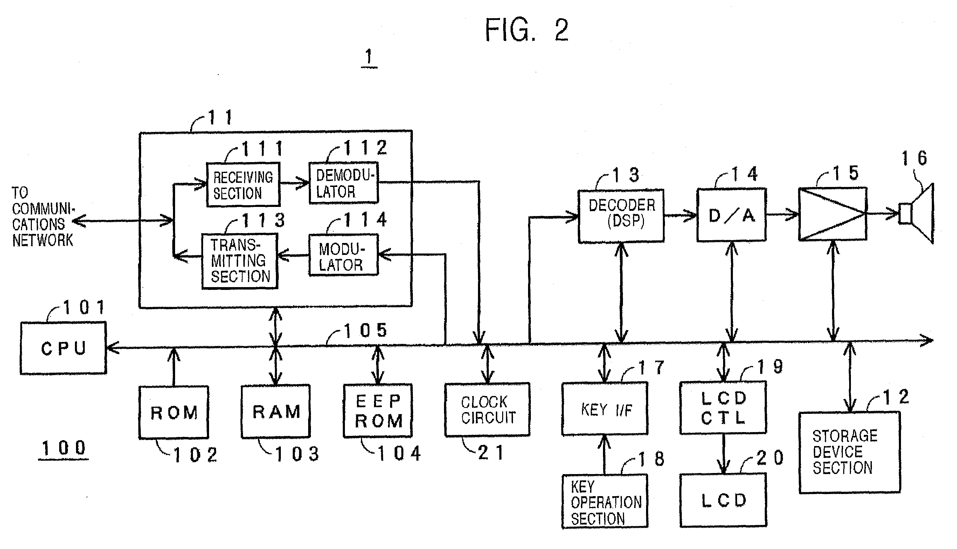

FIG. 2 is a block diagram illustrating the terminal apparatus 1 for use in the information distribution system in the present embodiment. As shown in FIG. 2, the terminal apparatus 1 of the present embodiment includes a control section 100, a communication section 11, a storage device section 12, an audio decoder 13, a digital-to-analog (D/A) converter 14, an audio amplifier 15, a speaker 16, a key interface (hereinafter referred to as a "key I/F") 17, a key operation section 18, an LCD (liquid crystal display) controller 19 which is shown as an "LCD CTL" in FIG. 2, an LCD 20, and a clock circuit 21.

The control section 100 is constituted by individual sections in the terminal apparatus 1 of the present embodiment, and is specifically constituted by a CPU (central processing unit) 101, a ROM (read only memory) 102, a RAM (random access memory) 103, and an EEPROM (electrically erasable and programmable ROM) 104, which are connected via a system bus 105 to provide the configuration of a microcomputer.

The ROM 102 is used to store various programs executed by the CPU 101 and various data needed, for example, in the process of executing a program. The RAM 103 is mainly used as a work area for, for example, temporarily storing a progress of various processing. The EEPROM 104 is the so-called "nonvolatile memory" and is used to store data that should be held even if the power of the terminal apparatus 1 of the present embodiment goes down. Examples of the data stored include various setting parameters.

As shown in FIG. 2, the communication section 11 includes a receiving section 111, a demodulator 112, a transmitting section 113, and a modulator 114. Under the control of the control section 100, the communication section 11 performs processing for receiving a signal directed to its own terminal apparatus 1 and processing for transmitting a signal, such as a signal for requesting information, to the distribution server apparatus 4.

The key operation section 18 includes, for example, numeric keys and various function keys, and accepts the entry of an instruction from the user. An instruction that is entered by the user and is accepted via the key operation section 18 is supplied as an electrical signal to the control section 100 via the key I/F 17. In response to the instruction from the user, the control section 100 can control the individual sections.

Through the LCD controller 19, which is controlled by the control section 100, the LCD 20 displays display information, such as various menu lists, information entry screens, alert messages, and guidance messages.

When an instruction, for example, for receiving a music-data distribution is received from the user via the key operation section 18, the control section 100 generates a distribution request for music data and supplies the distribution request to the modulator 114 in accordance with the accepted user's instruction. The modulator 114 modulates the supplied music-data distribution request according to a predetermined system to generate a transmission signal and supplies the transmission signal to the transmitting section 113. The transmitting section 113 amplifies the supplied transmission signal to a predetermined level and transmits the resulting signal to the distribution server apparatus 4 through the communications network 5.

The distribution server apparatus 4 receives the music-data distribution request transmitted as described above. In accordance with the received distribution request, the distribution server apparatus 4 retrieves the requested music data out of music data accumulated in the distribution server apparatus 4 and then transmits the retrieved music data to the requesting terminal apparatus 1.

The music data transmitted from the distribution server apparatus 4 to the terminal apparatus 1 is received by the receiving section 111 of the terminal apparatus 1. The music data is subjected to processing, such as amplification, by the receiving section 111 and the resulting music data is supplied to the demodulator 112. The demodulator 112 demodulates the music data supplied from the receiving section 111 to provide a pre-modulation original digital audio signal, which is then recorded in the storage device section 12 via the control section 100.

The storage device section 12 includes a storage medium having a relatively large storage capacity. Under the control of the control section 100, data can be recorded to or read from the storage medium. Various media can be used as the storage medium for the storage device section 12. Examples include a small-sized magneto-optical disk, such as an MD or MiniDisc (registered trademark); a semiconductor memory; and a miniaturized magnetic disk. In the present embodiment, for example, an MD may be used.

When an instruction for reproducing music data stored in the storage device section 12 is accepted via the key operation section 18, the control section 100 reads intended music data from the storage medium in the storage device section 12 and supplies the music data to the audio decoder 13, which may be implemented by a DSP (digital signal processor).

Music data stored in the storage device section 12 has been audio-compressed by a predetermined audio compression system, such as the ATRAC (Adaptive TRansform Acoustic Coding) system. Thus, the audio decoder 13 decompresses the supplied audio data to reconstruct its pre-compression audio data and supplies the resulting audio data to the D/A converter 14.

The D/A converter 14 converts the digital audio signal of the supplied audio data into an analog audio signal and supplies the analog audio signal to the audio amplifier 15. The audio amplifier 15 amplifies the analog audio signal and supplies the amplified analog audio signal to the speaker 16. As a result, sound is output from the speaker 16 in accordance with the audio data that has been read and reproduced from the storage device section 12.

As described above, in accordance with an instruction from the user, the terminal apparatus 1 of the present embodiment can generate a music-data distribution request, transmit the request to the distribution server apparatus 4, receive music data distributed from the distribution server apparatus 4, and accumulate the music data in the storage medium of the storage device section 12. Further, the terminal apparatus 1 can reproduce and use the music data accumulated in the storage medium of the storage device section 12, as needed.

Additionally, the distribution server apparatus 4 has demo data for pieces of music that it can distribute, as described above. At a time based on an instruction from the user, the terminal apparatus 1 can generate a demo-data distribution request, transmit the request to the distribution server apparatus 4, and receive and accumulate the demo data in advance, in the same manner as the above-described music data. This allows the user to promptly reproduce the demo audio data during an available time of the terminal apparatus 1 to listen to the demo music.

An instruction for desired reception time for demo data and an instruction for demo data desired to be distributed can be accepted via the key operation section 18. Accepted information can be stored in the EEPROM 104 as setting information. Further, the control section 100 monitors current time provided by the clock circuit 21. Upon detection of the arrival of a preset desired reception time, as described above, the control section 100 may generate a demo-data distribution request and transmit the request. This arrangement allows demo data to be distributed in a time period that is convenient for the user of the terminal apparatus 1.

Before performing a communication in the present embodiment, typically, the terminal apparatus 1 issues a request to call up the distribution server apparatus 4, acknowledges a response from the distribution server apparatus 4, and connects to the communications lines so as to communicate with the distribution server apparatus 4.

Demo data and/or music data the user wishes to have distributed can be selected through, for example, an at-a-glace list supplied from the distribution server apparatus 4. The demo data and/or music data that the user wishes to have distributed can be requested for a plurality of pieces of music at a time.

In addition, as described above, terminal apparatuses, such as the terminal apparatuses 2 and 3, that can access the distribution server apparatus 4 to receive demo data and/or music data are adapted to have functions that are similar to those of the terminal apparatus 1 described above with reference to FIG. 2.

### Basic Configuration and Operation of Distribution Server Apparatus

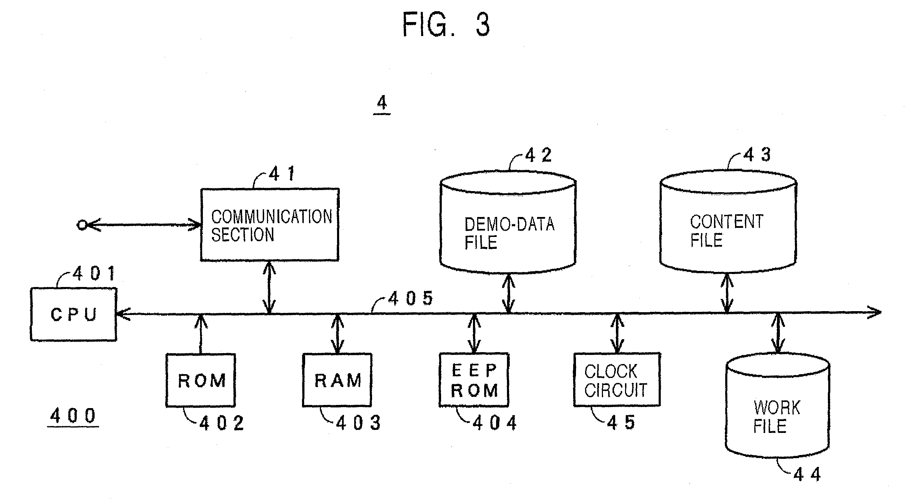

A description will now be given of the distribution server apparatus 4 for use in the information distribution system in the present embodiment. FIG. 3 is a block diagram illustrating the distribution server apparatus 4 for use in the information distribution system in the present embodiment. As shown in FIG. 3, the distribution server apparatus 4 of the present embodiment includes a control section 400, a communication section 41, a demo-data file 42, a content file 43, a work file 44, and a clock circuit 45.

The control section 400 is constituted by individual sections in the distribution server apparatus 4 of the present embodiment, and is specifically constituted by a CPU 401, a ROM 402, a RAM 403, and an EEPROM 404, which are connected via a system bus 405 to provide the configuration of a microcomputer. The ROM 402 stores various programs executed by the CPU 401 and various data needed, for example, in the process of executing a program. The RAM 403 is mainly used as a work area for, for example, temporarily storing a progress of various processing. The EEPROM 404 is the so-called "nonvolatile memory" and is used to store, for example, various setting parameters.

The communication section 41 includes a receiving section, a demodulator, a transmitting section, and a modulator, as in the communication section 11 of the terminal apparatus 1 shown in FIG. 2. Under the control of the control section 400, the communication section 41 performs processing for receiving a signal directed to the distribution server apparatus 4 and performs processing for transmitting distribution information, such as demo data and/or music data, as described below.

The demo data file 42 is used to store a large number of pieces of distributable demo data. The content file 43 is used to store a large number of pieces of music data, which are contents provided by the distribution server apparatus 4. The work file 44 is used as a work area for various types of processing. The demo-data file 42, the content file 43, and the work file 44 may be realized by, for example, a hard disk device. The clock circuit 45 mainly provides current time.

The communication section 41 receives and demodulates a demo-data distribution request or a music-data distribution request which is transmitted from the terminal apparatus 1 or the like and supplies the resulting reception signal to the control section 400. The control section 400 decodes the reception signal supplied from the communication section 41 to determine from which terminal apparatus the signal has transmitted and what type of request the signal indicates.

In accordance with the determined request, the control section 400 retrieves demo data or music data from the demo-data file 42 or the content file 43. The control section 400 then generates transmission information containing the retrieved data and causes the communication section 41 to modulate, amplify, and transmit the transmission information. As a result, the transmission information is distributed to the requesting terminal apparatus through the communications network 5.

In this manner, in response to a distribution request from each terminal apparatus, the distribution server apparatus 4 can distribute demo data or ordinary music data to only the requesting terminal apparatus.

### Setting of Desired Reception Time and Distribution Request for Demo Data

In the information distribution system of the present embodiment, as described above, the distribution server apparatus 4 can provide demo data. From the standpoint of the users of the terminal apparatuses, the demo data is not data required immediately, and thus each user may download demo data in a time period when his/her terminal apparatus is available (is not used). By doing so, anytime after the downloading, each user can promptly reproduce the demo data to preview the demo music and can determine whether or not to download complete music data that is not for preview.

Accordingly, as describe above, in the information distribution system of the present embodiment, each of the terminal apparatuses 1, 2, 3, ... sets a time period in which the user does not use the corresponding terminal apparatus, as a desired reception time period for receiving demo data from the distribution server apparatus 4. In the set time period, each of the terminal apparatuses 1, 2, 3, ... generates a demo-data distribution request, transmits the distribution request to the distribution server apparatus 4, and receives the demo data distributed from the distribution server apparatus 4 in advance. As a result, for example, in a time period in which the user has his/her spare time, he or she can promptly reproduce and use the downloaded demo data.

In this case, the desired reception time period is set by each terminal apparatus. That is, the desired reception time period is set at each terminal apparatus in its independent environment. That is, the desired reception time periods may be set such that, for example, an early-morning time period is set for one terminal apparatus, a daytime period is set for another terminal apparatus, and a late-night time period is set for another terminal apparatus. Thus, at each terminal apparatus, an available time period depending on the use pattern thereof can be set as the desired reception time period.

As a known approach, for example, based on the assumption that the terminal apparatuses are less frequently used during a late-night time period, the distribution server apparatus 4 may simultaneously distribute demo data to, for example, terminal apparatuses that are in a contract relationship for receiving music data distributed and that are pre-registered in the distribution server apparatus 4. Also, each terminal apparatus may cause its desired reception time period to be set in the distribution server apparatus 4, so that the distribution server apparatus 4 controls the distribution of demo data. Unlike such cases, the arrangement in the present embodiment can ensure each terminal apparatus to receive demo data distributed in its available time period without putting an extra load on the distribution server apparatus 4.

A typical example of such reception/distribution of demo data in the information distribution system of the present embodiment will now be described in detail in conjunction with a case in which the terminal apparatus 1 is used.

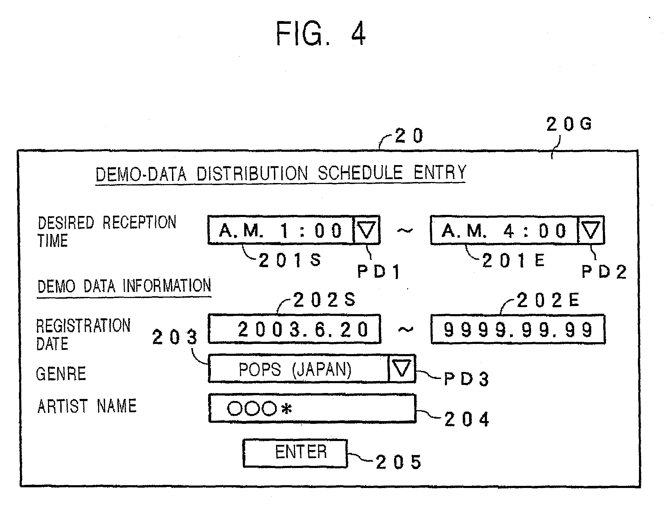

FIG. 4 is a schematic view illustrating a demo-data distribution-schedule-setting entry screen 20G that is displayed on the LCD 20 of the terminal apparatus 1, which is a terminal apparatus in the information distribution system of the present embodiment. In order to cause demo data to be distributed in a period when the terminal apparatus 1 is available, when the user operates the key operation section 18 to enter information for setting the distribution schedule of demo data (data for preview), the demo-data distribution-schedule-setting entry screen 20G shown in FIG. 4 is displayed on the LCD 20 of the terminal apparatus 1.

As shown in FIG. 4, a desired reception-start time field 201S and a desired reception-end time field 201E are provided in the demo-data distribution-schedule-setting entry screen 20G. Also provided at the right ends of the desired reception-start time field 201S and the desired reception-end time field 201E are adjusting buttons PD1 and PD2, respectively, for allowing the user to adjust desired reception start time and desired reception end time, for example, by the minute.

The desired reception time is a period of time from the desired reception start time to the desired reception end time. In this case, information is entered to specify the desired reception time period in which the terminal apparatus is not used but is able to start to receive demo data distributed. It is illustrated in the example shown in FIG. 4 that a time period of three hours from 1 a.m. to 4 a.m. is specified, but the desired reception time is not limited thereto. Thus, various different time periods can be specified.

That is, information specifying the desired reception time can be set to an appropriate time period, such as one hour from 0 a.m. to 1 a.m. or thirty minutes from 2 p.m. to 2: 30 p.m. Alternatively, the information can also be set to a specific time, such as from 7 a.m. to 7 a.m. (i.e. 7 a.m. sharp is specified). That is, Information specifying the desired reception time may be a time period or a time point.

In a case in which information specifying the desired reception time is a time period, when the time period is reached, the terminal apparatus generates a demo-data distribution request and transmits the distribution request. In this case, for example, when the terminal apparatus cannot communicate with the distribution server apparatus 4 for some reason such as a disconnection of a communications line, the terminal apparatus is adapted to repeatedly transmit the distribution request until the communication can be performed successfully.

In contrast, in a case in which information specifying the desired reception time is a time point, when the time point is reached, the terminal apparatus similarly generates a demo-data distribution request and transmits the distribution request. In this case, for example, when the terminal apparatus cannot communicate with the distribution server apparatus 4 for some reason such as a disconnection of a communications line, the terminal apparatus is adapted such that it does not repeatedly perform processing, such as transmitting the distribution request.

When information for specifying the desired reception time is a time period, it is possible to re-issue a request by also considering the distribution time of data from the distribution server apparatus 4. A description below in the present embodiment is given assuming that information specifying the desired reception time is a time period.

On the demo-data distribution-schedule-setting entry screen 20G, several entry fields regarding demo-data information are provided to request the supply of demo data. That is, in the example shown in FIG. 4, a start registration date field 202S and an end registration date field 202E are also provided to indicate when demo data of interest has become available for distribution.

With the information entered in the start registration date field 202S and the end registration date file 202E, the user can issue, to the distribution server apparatus 4, a request for the distribution of demo data with a period of time from when it was registered until when it is available for distribution. In the case of the example shown in FIG. 4, the end registration date that can be entered is its maximum value, i.e., 9999/99/99 (year/month/date), and demo data that has become available for distribution after 2003/6/20 can be specified as demo data for distribution. Information indicating the registration date can be used to allow the distribution server apparatus 4 to identify (or narrow down) desired demo data (i.e., demo data requested for distribution), as described above.

In FIG. 4, a genre entry field 203 is used to enter information for specifying a genre for demo data to be requested for distribution. Examples of the genre include pops (Japan), pops (overseas), jazz, classics, folk songs, and ballad. The genre information can also be used to allow the distribution server apparatus 4 to identify (or narrow down) demo data desired for distribution. A change button PD3 is also provided at the right end of the genre entry field 203 so as to allow the user to sequentially change the genre and display it on a predetermined display device.

As shown in FIG. 4, an artist-name entry field 204 is further provided. This artist-name entry field 204 is used to enter the name of an artist of desired music data. Information entered in the artist-name information 204 can also be used to allow the distribution server apparatus 4 to identify (or narrow down) demo data desired for distribution.

With this arrangement, the distribution server apparatus 4 retrieves demo data with which the registration date information, the genre information, and the artist name information match and distributes the retrieved demo data. Thus, the user of the terminal apparatus 1 can transmit a distribution request for a plurality of pieces of demo data.

After entering necessary information in the individual entry fields on the demo-data distribution-schedule-setting entry screen 20G shown in FIG. 4, the user selects and presses an entry button 205 shown in FIG. 4. As a result, information input through the demo-data distribution-schedule-setting entry screen 20G shown in FIG. 4 is stored in, for example, the EEPROM 104 as demo-data distribution-schedule-setting information.

When the demo-data distribution-schedule-setting information is stored in the memory of the terminal apparatus 1 as described above, the control section 100 monitors the current time indicated by the clock circuit 21. Upon detecting the arrival of the pre-set desired reception time period, the control section 100 generates a demo-data distribution request and transmits the distribution request to the distribution server apparatus 4.

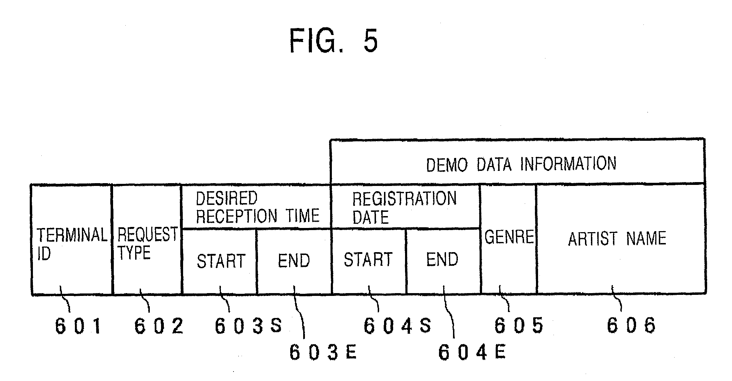

FIG. 5 is schematic view illustrating one example of the demo-data distribution request. As shown in FIG. 5, the demo-data distribution request of this example contains a terminal identifier (ID) 601, a request type 602, a desired reception start time 603S, a desired reception end time 603E, a start registration date 604S, an end registration date 604E, a genre 605, and an artist name 606.

The terminal ID 601 is information unique to each terminal apparatus and is used to identify the transmitting end of the distribution request, i.e., the requesting end of the distribution request. The terminal ID 601 is, for example, a membership number, a telephone number assigned to each terminal apparatus, or a manufacture serial number. In this case, the membership number is assigned to a user who has agreed to a contract with a service provider that operates the distribution server apparatus 4 and who can thus receive music data distributed from the distribution server apparatus 4. Information for use as the terminal ID is stored in, for example, the ROM or EEPROM of each terminal apparatus.

The request type 602 indicates what is requested by the request configured as shown in FIG. 5. In the case of this example, the request represents a demo-data distribution request. The provision of the request type in this manner allows not only demo data but also music data, which is ordinary content information supplied on a pay basis, to be requested for automatic distribution at a schedule time.

The pieces of information subsequent to the request type 602, i.e., the desired reception start time 603S and the subsequent information, are information that are entered through the demo-data distribution-schedule-setting entry screen 20G shown in FIG. 4. The semantic content of each piece of information is as described with reference to FIG. 4.

In response to the demo-data request information (shown in FIG. 5) transmitted from the terminal apparatus, the distribution server apparatus 4 can recognize from which terminal apparatus the request is transmitted, when the requested demo data was registered, which genre of music is requested, and to which artist the requested music belongs.

The distribution server apparatus 4 retrieves the requested demo data from the demo-data file 42 and distributes the demo data to the requesting terminal apparatus. In this case, the distribution server apparatus 4 can also check whether or not the current time is in the desired reception time period set by the terminal apparatus.

A case in which the terminal apparatus 1 is used has been described above; however, when another terminal apparatus, for example, the terminal apparatus 2 or 3, is used, the configuration and operation thereof are substantially the same as to those described above. In such a case, for example, the demo-data distribution-schedule-setting entry screen can take a form corresponding to each terminal apparatus. Thus, various entry screens may be provided and used, depending on the screen size of the display device provided at each terminal apparatus.

### First Example of Operation of Information Distribution System

A description is now given of the operation of the information distribution system of the present embodiment which includes the above-described terminal apparatuses 1, 2, 3, ... and the distribution server apparatus 4. The following description is also given in conjunction with an example in which the user uses the terminal apparatus 1. However, when another terminal apparatus, such as the terminal apparatus 2 or 3, is used, the operation thereof is analogous to that of the terminal apparatus 1.

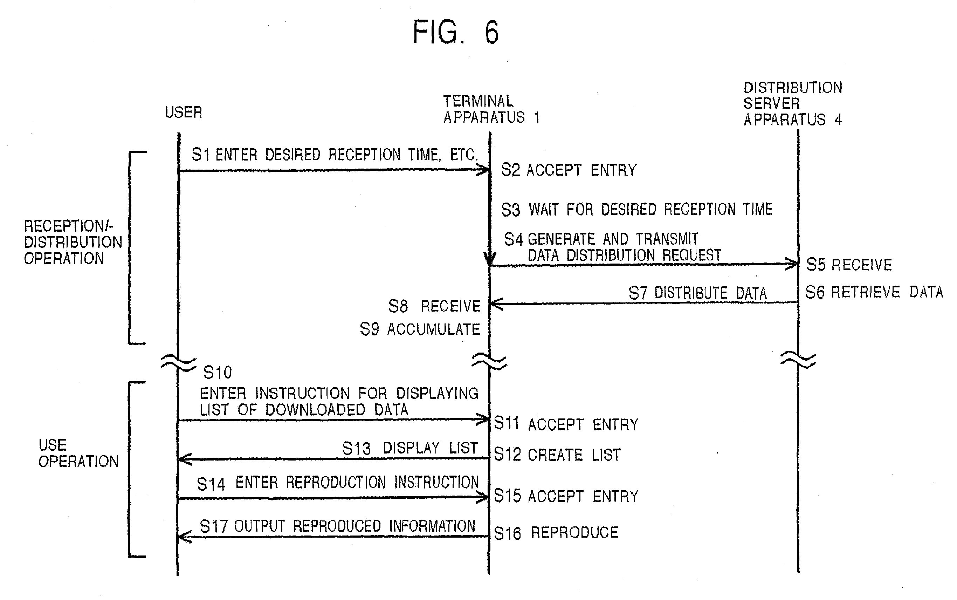

FIG. 6 is a sequence diagram illustrating a first example of the operation of the information distribution system of the present embodiment. For simplicity of description, this sequence diagram also includes the operation of the user's terminal apparatus 1.

As described above, for setting of a demo-data distribution schedule, the user performs a predetermined operational input on the key operation section 18, so that the demo-data distribution-schedule-setting entry screen 20G shown in FIG. 4 is displayed on the LCD 20. In step S1, the user of the terminal apparatus 1 enters desired reception time and so on via the key operation section 18.

In step S2, the terminal apparatus 1 accepts the entry and stores the accepted setting information in, for example, the EEPROM 104. In step S3, the control section 100 of the terminal apparatus 1 starts monitoring of the current time provided by the clock circuit 21 and enters a wait state until the desired reception time stored in the EEPROM 104 arrives. When detecting the arrival of the desired reception time, in step S4, the terminal apparatus 1 generates a distribution request having the data structure shown in FIG. 5 and transmits the distribution request to the distribution server apparatus 4, in accordance with the setting information accepted in step S2.

In step S5, the distribution server apparatus 4 receives the distribution request from the terminal apparatus 1. In step S6, the distribution server apparatus 4 retrieves the demo data requested for distribution from the demo-data file 42. In step S7, the distribution server apparatus 4 transmits the retrieved demo data to the requesting terminal apparatus 1.

In step S8, the terminal apparatus 1 receives the demo data transmitted from the distribution server apparatus 4. In step S9, the terminal apparatus 1 records and accumulates the demo data in the storage device section 12, so that the demo data can be used anytime. The operation from step S1 to step S9 represents the reception/distribution operation of a distribution request and distribution data.

After the completion of the reception/distribution operation from step S1 to step S9, when the user uses the demo data stored/accumulated in the storage device section 12, in step S10, he or she enters an instruction for displaying an at-a-glance list of the downloaded demo data via the key operation section 18.

In step S11, the terminal apparatus 1 accepts the user's entry of the display instruction for an at-a-glance list of the demo data. In step S12, in response to the accepted instruction, the terminal apparatus 1 creates an at-a-glance list of the demo data in accordance with the demo data accumulated in the storage device section 12. In step S13, the created demo-data list is displayed on the LCD 20, so that the user can view the list.

The user selects demo data he or she wishes to listen to out of the demo-data list displayed on the LCD 20 of the terminal apparatus 1 and, in step S14, the user enters an instruction for reproducing the selected demo data by using the key operation section 18. In step S15, the terminal apparatus 1 accepts the entry of the instruction. In step S16, the terminal apparatus 1 reads the demo data specified by the instruction from the storage device section 12, supplies the demo data to the audio decoder 13, and performs processing for reproducing the demo data.

As a result, in step S17, sound corresponding to the selected demo data is output from the speaker 16 of the terminal apparatus 1, so that the user of the terminal apparatus 1 can preview part of the desired piece of music.

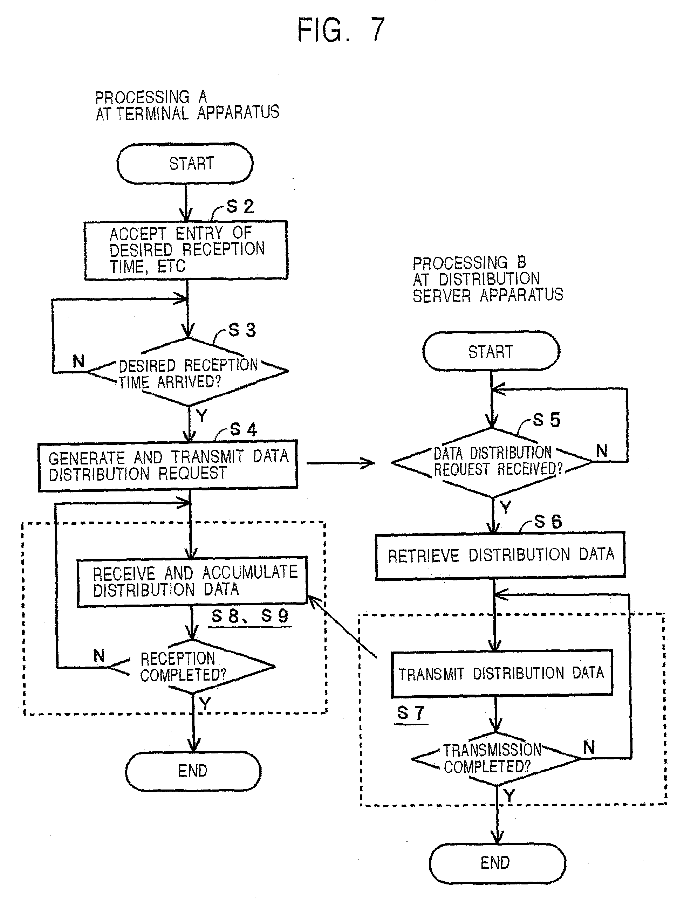

Processing performed by the terminal apparatus 1 and the distribution server apparatus 4, which operate as illustrated in FIG. 6, in the present embodiment will now be described with reference to the flow chart shown in FIG. 7. In the flow chart shown in FIG. 7 and the sequence diagram shown in FIG. 6, corresponding steps are denoted with the same reference characters so that the relationships therebetween become obvious. In FIG. 7, processing A represents processing executed by the terminal apparatus 1 and processing B represents processing executed by the distribution server apparatus 4.

As shown in processing A of FIG. 7, in step S2, the control section 100 of the terminal apparatus 1 displays the entry screen 20G shown in FIG. 4 on the LCD 20, accepts the entry of necessary information, such as a desired reception time, from the user via the key operation section 18, and stores the accepted information in, for example, the EEPROM 104. In step S3, the control section 100 of the terminal apparatus 1 then enters a wait state until the current time provided by the clock circuit 21 reaches the desired reception time. When detecting that the desired reception time is reached, in accordance with the information accepted and stored in the EEPROM 104 in step S2, the control section 100 generates a demo-data distribution request having the data structure shown in FIG. 5 and transmits the distribution request to the distribution server apparatus 4 in step S4.

In this case, before transmitting the demo-data distribution request to the distribution server apparatus 4, the control section 100 of the terminal apparatus 1 accesses the distribution server apparatus 4 to connect a communications line between the terminal apparatus 1 and the distribution server apparatus 4.

As shown in processing B of FIG. 7, in step S5, the control section 400 of the distribution server apparatus 4 enters a wait state for receiving the data distribution request from the terminal apparatus 1 that has connected to the communications line. Upon receiving the data distribution request, in step S6, the control section 400 retrieves, from the demo-data file 42, requested demo data (distribution data) in accordance with the received data distribution request. In step S7, the control section 400 then distributes the retrieved demo data to the requesting terminal apparatus 1.

In step S8, the terminal apparatus 1 receives the demo data (i.e., distribution data) transmitted from the distribution server apparatus 4. In step S9, the terminal apparatus 1 records and accumulates the demo data in the storage medium of the storage device section 12.

In the case of this example, the processing for transmitting demo data that is retrieved by the distribution server apparatus 4 in step S7 is continued until the transmission (distribution) of all the retrieved demo data is completed. Similarly, the processing for receiving and accumulating demo data in steps S8 and S9 is continued until the transmission of the demo data from the distribution server apparatus 4 is completed.

With this arrangement, as described above, at each of the terminal apparatuses 1, 2, 3, ..., a time period in which the user does not use the terminal apparatus can be set as a desired reception time period for receiving demo data from the distribution server apparatus 4. Further, in the set time period, the terminal apparatus creates a demo data distribution request and transmits the distribution request to the distribution server apparatus 4, so that the terminal apparatus can receive desired demo data distributed from the distribution server apparatus 4. As a result, the user can promptly reproduce and use the downloaded demo data anytime.

In this case, an available time period depending on the use pattern of each terminal apparatus can be set as a desired reception time period. Thus, unlike a case in which the distribution server apparatus 4 distributes data to a larger number of terminal apparatuses during a nighttime period when the communication state is relatively good, the arrangement in the present embodiment allows any of the terminal apparatuses to reliably obtain and accumulate demo data during a time period when the terminal apparatus is not used. This arrangement, therefore, allows each terminal apparatus to reliably receive demo data distributed in its available time without putting an extra load on the distribution server apparatus 4.

Additionally, creating a program that realizes the steps in processing A shown in FIG. 7 and installing the program to a mobile terminal or a personal computer allows the equipment to be used as the distribution-service-compatible terminal apparatus in the present embodiment. Further, creating a program that realizes the steps in processing B shown in FIG. 7 and installing the program to various types of server apparatus can achieve the distribution server apparatus in the present embodiment.

The first example of the demo-data reception/distribution processing in the information distribution system has been described above as the most basic example with reference to FIGS. 6 and 7. Making an improvement to the first example makes it possible to enhance the convenience of the user of the terminal apparatus and to improve the reliability of transmission/reception of data. Some other examples of the demo-data reception/distribution processing in the information distribution system will be described below.

The following description is given assuming that the configuration of the information distribution system, the configuration of the terminal apparatuses 1, 2, and 3, the configuration of the distribution server apparatus 4, the form of the communications network 5, the configuration of the entry screen, and the data structure of a distribution request are the same as those described with reference to FIGS. 1 to 5. For simplicity of description, in the following sequence diagrams and flow charts, the operation and processing which are analogous to those shown in FIGS. 6 and 7 are denoted with the same reference numerals and the details thereof are not described or briefly described.

### Second Example of Operation of Information Distribution System

A communications line connected between the terminal apparatus 1 and the distribution server apparatus 4 is not always in a satisfactory communication state. For example, when the communications network 5 is congested, the state of communication with the distribution server apparatus 4 also becomes worse and the data transmission speed decreases. In this case, when the distribution of a large amount of demo data is requested, inconvenience, such as extended downloading time, may occur.

Accordingly, in the case of this second example, the terminal apparatus 1 checks the state of communication with the distribution server apparatus 4. When the communication state is not bad, the terminal apparatus 1 is adapted to transmit a distribution request and to receive demo data distributed.

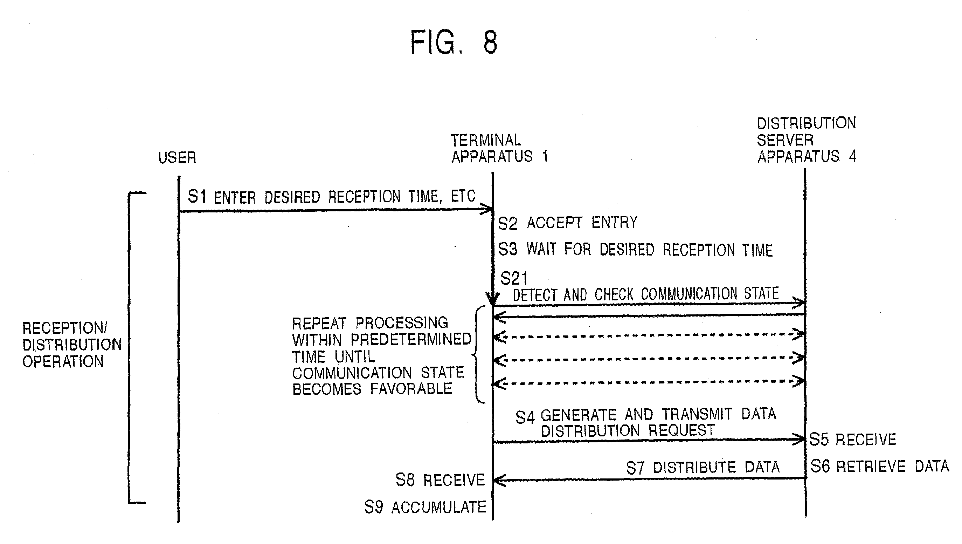

FIG. 8 is a sequence diagram illustrating the second example of the operation of the information distribution system in the present embodiment. As shown in FIG. 8, processing from when the user enters the desired reception time and so on of distribution data until when the arrival of the desired reception time is detected, i.e., processing from step S1 to step S3, is analogous to the processing from step S1 to step S3 in the first example illustrated in FIG. 6.

Upon detecting the arrival of a desired reception time, in step S21, the terminal apparatus 1 connects a communications line with the distribution server apparatus 4 to transmit, for example, test data to the distribution server apparatus 4 and to receive return data therefrom. The terminal apparatus 1 measures the time for transmission and reception to check the communication state of the communications line to be connected. When the response is unsatisfactory in this checking processing, the terminal apparatus 1 further repeats the checking operation for the communication state of the communications line to be connected.

Such a communication-state checking operation is repeated until it is confirmed that the response is satisfactory and the transmission/reception of music data does not require time more than required, within a time period from the desired reception start schedule time to the desired reception end schedule time which are accepted in step S2. In FIG. 8, dotted-line arrows between the terminal apparatus 1 and the distribution server apparatus 4 indicate a possibility that the communication-state checking operation is repeated.

When the terminal apparatus 1 determines that the communication state of the communications line connected with distribution server apparatus 4 is satisfactory and the data transmission/reception does not require time more than required, the terminal apparatus 1 generates a distribution request having, for example, the data structure shown in FIG. 5 and transmits the distribution request to the distribution server apparatus 4 in accordance with the setting information accepted in step S2. Thus, the terminal apparatus 1 performs the processing of step S4.

In turn, the distribution server apparatus 4 performs processing from step S5 to step S7. Specifically, the distribution server apparatus 4 receives the distribution request from the terminal apparatus 1 and retrieves, from the demo-data file 42, the demo data requested for distribution. The distribution server apparatus 4 then transmits the retrieved demo data to the requesting terminal apparatus 1. As shown at steps 8 and 9, the terminal apparatus 1 receives the demo data transmitted from the distribution server apparatus 4 and records and accumulates the demo data in the storage medium of the storage device section 12, so that the demo data can be used anytime.

The second example (illustrated in FIG. 8) of the operation of the information distribution system is the same as the first example illustrated in FIG. 6, except that the operation in the second example includes the communication-state detection and check processing in step S21 which is performed by the terminal apparatus 1. Further, in the second example (illustrated in FIG. 8) of the operation of the information distribution system, the processing at the distribution server apparatus 4 is analogous to that illustrated in processing B shown in FIG. 7, but the processing at the terminal apparatus 1 further includes processing for checking the communication state.

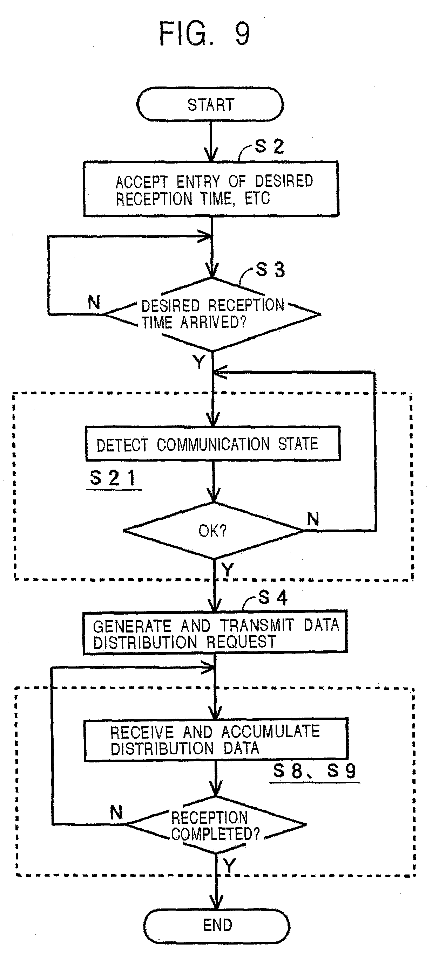

FIG. 9 is a flow chart illustrating the processing of the terminal apparatus 1 in the second example. As can be seen from the comparison between FIG. 9 and processing A in FIG. 7 (which illustrates the first example), the processing in the second example is analogous to the processing of the terminal apparatus 1 in the first example illustrated in processing A in FIG. 7, except that the communication-state detection and check processing in step S21 is provided between step S3 and step S4.

When the result of detection of the state of communication between the terminal apparatus 1 and the distribution server apparatus 4 indicates that the communication cannot be successively performed, demo-data downloading which requires extra time is not performed, but demo data is downloaded when the communication state of the communications line becomes satisfactory.

Further, the arrangement may be such that the communication-state detection and check are repeated while the communications line is connected. With such an arrangement, however, the communication cost is increased. Accordingly, when it is determined that the communication state is unsatisfactory during the communication-state detection and check, i.e., in the processing in step S21, the connected communications line may be opened so that, after the elapse of a predetermined time, the terminal apparatus 1 can attempt to re-connect the communications line with the distribution server apparatus 4 for performing the communication-state detection and check. This can save the communication cost.

As described above, in the communication-state detection and check, for example, the terminal apparatus 1 may be adapted such that, for example, it transmits predetermined test data and receives a response therefor from the receiving end. In such a case, by detecting the time required from the transmission of the test data until the reception of the response, the terminal apparatus 1 can check the communication state in accordance with the detected time. When the communications network 5 is the Internet, an ICMP (Internet Control Message Protocol), which is so-called ping and is one type of high-order IP protocol, and a program for transmitting a response request to a receiving-end host may be used to detect and check the communication state.

The description for the second example has been given of a case in which the distribution request for demo data is not transmitted until the communication state becomes favorable, but the present invention is not limited thereto. Thus, the amount of demo data requested may be adjusted depending on the communication state. For example, In a case in which demo data requested for distribution is registered for 10 days from the 1st to 10th of a month, the demo data for two days from the 1st to 2nd may be requested, and after the completion of reception of the requested demo data, the distribution of data corresponding to a predetermined registration time period, out of the remaining demo data, may be requested depending on the communication state.

Similarly, for example, in a case in which the distribution of demo data for 30 pieces of music is requested out of an at-a-glance list of distributable demo data, when the commutation state is unsatisfactory, the supply of demo data for 10 pieces of music is first requested, and after the reception of the demo data for 10 pieces of music, the communication state is checked and, of the remaining demo data, the distribution of data for a predetermined number of pieces of music is requested depending on the communication state.

In such a case, demo data must be managed in the terminal apparatus so that demo data that has been requested and distributed and demo data that has not been requested for distribution can be distinguished. At each terminal apparatus, therefore, the registration dates for demo-data distribution schedule entry information and so on need to be updated so that demo data to be requested next can be clearly recognized.

Additionally, creating a program that realizes the steps shown in FIG. 9 and installing the program to a mobile terminal or a personal computer allows the equipment to be used as the distribution-service-compatible terminal apparatus in the present embodiment.

### Third Example of Operation of Information Distribution System

While the terminal apparatus 1 is adapted to check the state of communication with distribution server apparatus 4 in the second example (illustrated in FIGS. 8 and 9) of the operation of the information distribution system, the present invention is not limited thereto. In a third example described below, upon accepting a demo-data distribution request, the distribution server apparatus 4 detects and checks the state of communication with the requesting terminal apparatus 1. Further, when the communication state is unsatisfactory, the distribution server apparatus 4 is adapted to notify the requesting terminal apparatus about the time of starting retry processing.

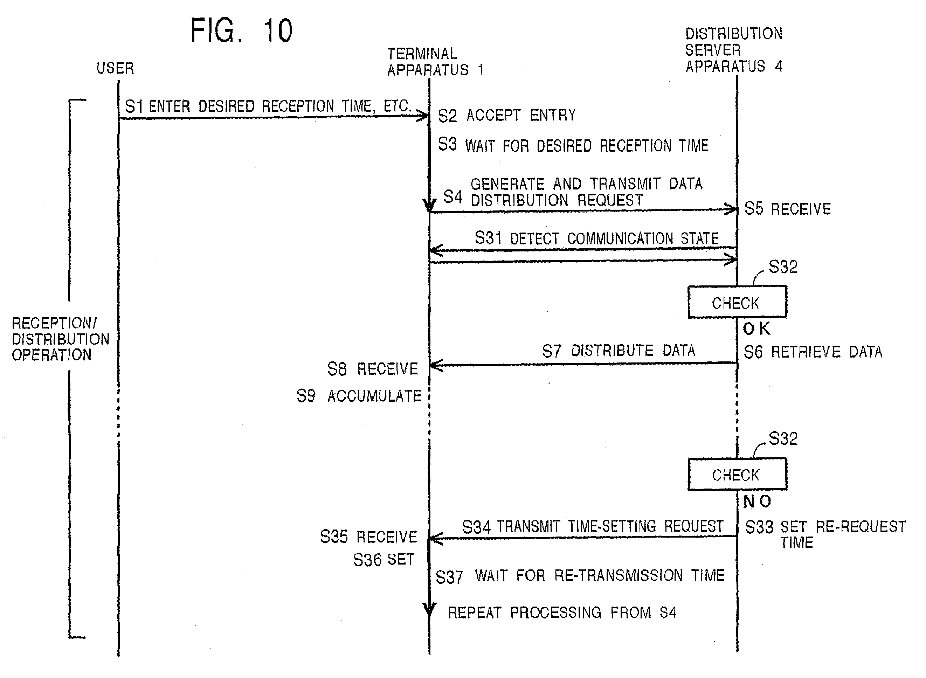

FIG. 10 is a sequence diagram illustrating the third example of the operation of the information distribution system in the present embodiment. As shown in FIG. 10, the processing of the user's entry of the desired reception time and so on of distribution data, the detection of arrival of the desired reception time, the generation and transmission of the distribution request, and the retrieval and loading of the distribution request by the distribution server apparatus 4, i.e., processing from step S1 to step S5, is analogous to the processing from step S1 to step S5 in the first example illustrated in FIG. 6.

In the third example, as shown in FIG. 10, upon receiving the distribution request, the distribution server apparatus 4 transmits a test signal to the requesting terminal apparatus 1 and receives a response thereto. In step S31, the distribution server apparatus 4 measures the transmission and reception time to detect the state of communication with the requesting terminal apparatus 1. In step S32, the distribution server apparatus 4 checks whether or not the communication state is satisfactory.

When it is confirmed in the check processing in step S32 that the communication state is satisfactory, the distribution server apparatus 4 performs processing in steps S6 and S7, as in the first example illustrated in FIG. 6. Specifically, in step S6, the distribution server apparatus 4 retrieves requested demo data from the demo-data file 42 in accordance with the distribution request transmitted from the terminal apparatus 1. In step S7, the distribution server apparatus 4 distributes the retrieved demo data to the requesting terminal apparatus 1.

In step S8, the terminal apparatus 1 receives the demo data, i.e., distribution data, from the distribution server apparatus 4, as in the first example illustrated in FIG. 6. In step S9, the terminal apparatus 1 records and accumulates the distribution data in the storage medium of the storage device section 12.

On the other hand, when it is determined in the check processing in step S32 that the communication state is unsatisfactory, in step S33, the distribution server apparatus 4 sets re-request time of which the requesting terminal apparatus 1 is to be notified. In step S34, the distribution server apparatus 4 transmits a time-setting request indicating the re-request time to the terminal apparatus 1 of the distribution requesting end.

In step S35, the terminal apparatus 1 receives the time-setting request from the distribution server apparatus 4. In step S36, in accordance with the time-setting request, the terminal apparatus 1 sets and stores the time (re-request time) for transmitting a next demo-data distribution request in its own EEPROM 104. Thereafter, in step S37, the terminal apparatus 1 enters a wait state until the re-request time set in step S36 is reached. When the re-request time is reached, the processing from step S4, i.e., the processing in which a demo-data distribution request is generated and is transmitted to the distribution server apparatus 4, is repeated.

As described above, in addition to the basic processing illustrated in FIG. 6, the processing in the third example (illustrated in FIG. 10) of the operation of the information distribution system includes the processing in step S31 in which the distribution server apparatus 4 detects a communication state, the processing in step 32 in which the distribution server apparatus 4 checks the communication state, the re-request time setting processing in step S33 which is performed when it is determined in the check processing in step S32 that the communication state is unsatisfactory, and the time-setting request transmission processing in step S34. The processing in the third example further includes the processing in step S35 in which the terminal apparatus 1 receives the time-setting request and the processing in step S36 in which the terminal apparatus 1 sets a re-request time.

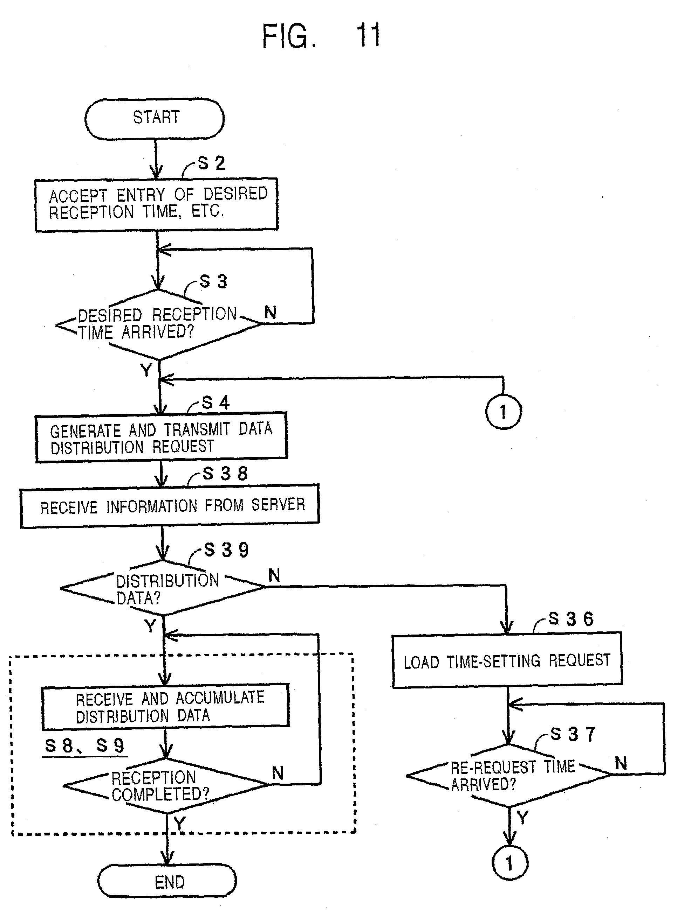

FIG. 11 is a flow chart illustrating the processing of the terminal apparatus 1 in the third example. As can be seen from the comparison between FIG. 11 and processing A in FIG. 7 (which illustrate the first example), processing in S38 and the subsequent processing are different from the processing of the terminal apparatus 1 in the first example.

More specifically, as shown in FIG. 11, as in the first example shown in processing A of FIG. 7, in step S2, the terminal apparatus 1 accepts the entry of, for example, desired reception time. In step S3, the terminal apparatus 1 enters a wait state until the desired reception time is reached. When the desired reception time is reached, in step S4, the terminal apparatus 1 generates demo-data distribution request and transmits the distribution request.

Thereafter, in step S38, the terminal apparatus 1 receives information directed thereto from the distribution server apparatus 4. In step S39, the terminal apparatus 1 determines whether or not the received information is demo data, i.e., distribution data. When it is determined in the determination processing in step S39 that the received information is demo data, in step S8, the control section 100 of the terminal apparatus 1 sequentially receives demo data that is transmitted. In step S9, the control section 100 records and accumulates the demo data in the storage medium of the storage device section 12. The processing in steps S8 and S9 is repeated until the transmission of the demo data from the distribution server apparatus 4 is completed.

On the other hand, when it is determined in the determination processing in step S39 that the received information is not demo data, the control section 100 of the terminal apparatus 1 determines that the information received from the distribution server apparatus 4 is a time-setting request. In step S36, the control section 100 loads the received time-setting request, and sets re-request time for requesting the supply of demo data, in accordance with the time-setting request. In step S37, the control section 100 enters a wait state until the set re-request time is reached. When it is determined in the determination processing in step S37 that the re-request time is reached, the terminal apparatus 1 repeats the processing from step S4. That is, the terminal apparatus 1, again, generates a demo-data distribution request, transmits the distribution request, and waits for the distribution of demo data.

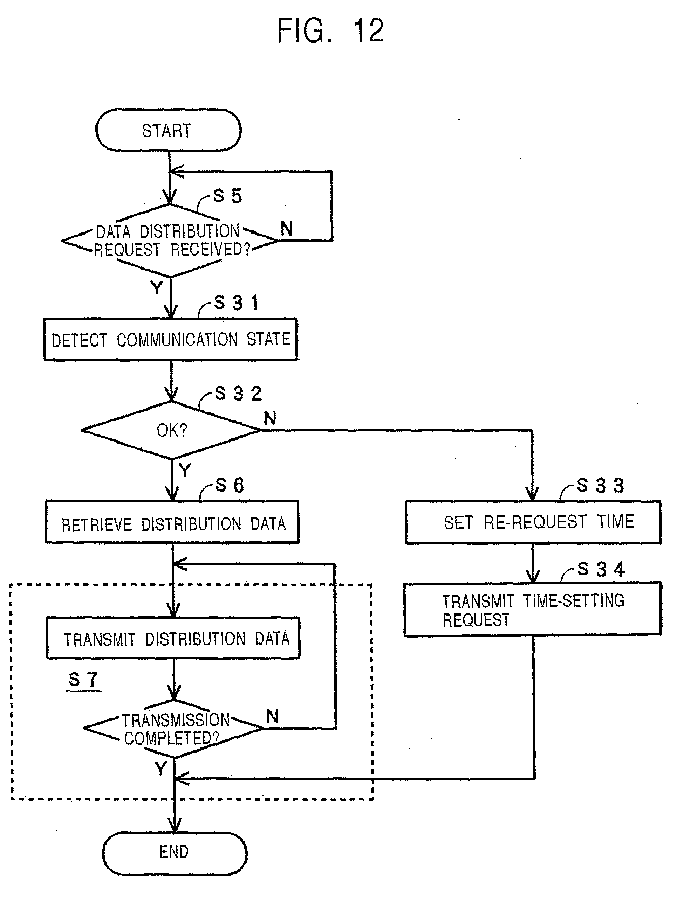

FIG. 12 is a flow chart illustrating the processing of the terminal apparatus 1 in the third example. As in the processing (illustrated in processing B shown in FIG. 7) of the distribution server apparatus 4, in step S5, the distribution server apparatus 4 in the third example waits for the transmission of a distribution request form the terminal apparatus 1. Upon receiving a distribution request, in step S31, the distribution server apparatus 4 detects the sate of communication with the terminal apparatus 1. This can be achieved by, for example, transmitting test data to the terminal apparatus 1 and measuring the time until a response thereto is received.

In step S32, in accordance with the communication state detected in step S31, the distribution server apparatus 4 checks whether or not the state of communication with the terminal apparatus 1 is satisfactory. When it is determined that the communication state is favorable, in step S6, the distribution server apparatus 4 retrieves demo data to be distributed, in accordance with the request from the terminal apparatus 1. In step S7, the distribution server apparatus 4 distributes the retrieved demo data to the requesting terminal apparatus 1, and the processing shown in FIG. 12 ends. The processing in steps S6 and S7 is analogous to the processing performed by the terminal apparatus 4 in the first example.

On the other hand, when it is determined in the check processing in step S32 that the state pf communication with the terminal apparatus 1 (which is the requesting end of the demo data) is unsatisfactory, in step S33, the control section 400 of the distribution server apparatus 4 sets re-request time to be supplied to the terminal apparatus 1. In step S34, the distribution server apparatus 4 generates a request (a time-setting request) for causing the terminal apparatus 1 to set the re-request time as time at which a demo-data distribution request is to be generated again and to be transmitted, and transmits the generated time-setting request to the terminal apparatus 1. The distribution server apparatus 4 then opens the communications line for the terminal apparatus 1, and the processing shown in FIG. 12 ends.

Based on a past communication-state history and so on, the distribution server apparatus 4 may set a time when the commutation state is satisfactory, within the desired distribution time period of the requesting terminal apparatus 1, as the re-request time. Alternatively, as the re-request time, the distribution server apparatus 4 may set a time after the elapse of a predetermined time, for example, five or ten minutes.

As described above, in the fourth example, the distribution server apparatus 4 is adapted to play a major role in detecting and checking the communication state. With this arrangement, when the communication state is unsatisfactory, the distribution server apparatus 4 can set re-request time and can open the communications line for the requesting terminal apparatus until the re-request time is reached. Consequently, it is possible to reduce the communication cost.

Further, in the third example, the distribution server apparatus 4 may be adapted to distribute part of demo data requested by the terminal apparatus, depending on the communication state. For example, when the distribution of demo data for 50 pieces of music is requested from the terminal apparatus, the distribution server apparatus 4 may limit the distribution to, for example, the data for 10 pieces of music, depending on the communication state.

In such a case, with respect to requested demo data, the requesting terminal apparatus needs to clearly recognize demo data that has been distributed (i.e., demo data that has been received) and demo data that has not been distributed (i.e., demo data that has not been received), so that the terminal apparatus can re-issue a request for the distribution of demo data that has not been distributed (i.e., demo data that has not been received).

Various approaches are possible for the management in such a case. For example, the distribution server apparatus 4 may transmit difference information, indicating a difference between requested demo data and distributed demo data, to the requesting terminal apparatus, so that the terminal apparatus can re-request data corresponding to the difference. Naturally, the terminal apparatus may be adapted to perform the management by obtaining information indicating a difference between requested demo data and distributed demo data.

Additionally, creating a program that realizes the steps shown in FIG. 11 and installing the program to a mobile terminal or a personal computer allows the equipment to be used as the distribution-service-compatible terminal apparatus in the present embodiment. Further, creating a program that realizes the steps shown in FIG. 12 and installing the program to various types of server apparatus can achieve the distribution server apparatus in the present embodiment.

### Fourth Example of Operation of Information Distribution System

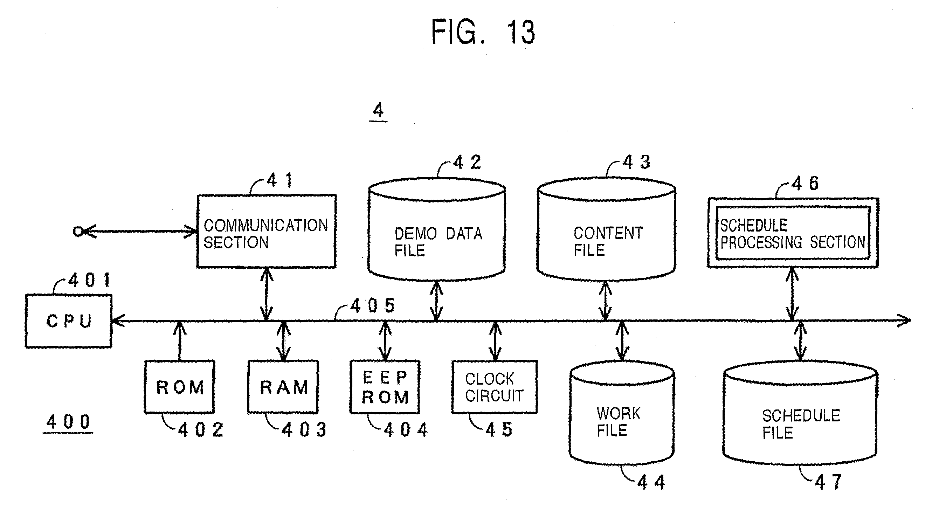

In a fourth example described below, the distribution of demo data is scheduled so as to prevent a delay in the distribution, in accordance with a distribution request from each terminal apparatus. A description for the fourth example is given assuming that, as shown in FIG. 13, the distribution server apparatus 4 includes a schedule-processing section 46 and a schedule file 47, in addition to the distribution server apparatus4 shown in FIG. 4, for simplicity of illustration.

The schedule-processing section 46 can be implemented by software executed by the control section 400. The schedule file 47 is used to store schedule information. The schedule file 47 may be stored in a single storage medium as show in FIG. 13, or may be provided in a part of a storage region, such as the work file 44.

While the schedule-processing section 46 and the schedule file 47 are provided in the fourth example, the basic configuration is analogous to that of the distribution server apparatus 4 shown in FIG. 3. Needless to say, in FIG. 13, the individual sections other than the schedule-processing section 46 and the schedule file 47 have configurations that are analogous to the corresponding sections in the distribution server apparatus 4 shown in FIG. 3.

In the fourth example, when the distribution server apparatus 4 receives a demo-data distribution request form the terminal apparatus, first, the schedule-processing section 46 checks schedule information in the schedule file 47, to thereby determine whether or not there is an opening in the distribution schedule to allow demo data to be distributed at the current time. When it is determined that the distribution is possible, the distribution server apparatus 4 immediately retrieves demo data corresponding to the distribution request and distributes the demo data to the requesting terminal apparatus.

On the other hand, when it is determined that demo data cannot be distributed in a satisfactory manner at the present time due to the absence of an opening in the schedule, the distribution server apparatus 4 is adapted to allot a time period in which the demo data can be distributed in a satisfactory manner to the requesting terminal apparatus, by considering the schedule information in the schedule file 47, the distribution capability of the distribution server apparatus 4, a desired reception time period of the requesting terminal apparatus, and so on. The distribution server apparatus 4 then transmits a time-setting request to the requesting terminal apparatus so as to urge the terminal apparatus to set distribution schedule time, which is the start time of the above-noted allotted time period, as re-request time.

Upon receiving the time-setting request from the distribution server apparatus 4, the terminal apparatus sets re-request time in accordance with the time-setting request. When the re-request transmission time arrives, the distribution server apparatus 4 generates a demo-data distribution request again and transmits the distribution request to the distribution server apparatus 4. In this case, the distribution schedule time is based on scheduling that considers, for example, the distribution request that is transmitted from each terminal apparatus and received by the distribution server apparatus 4, the distribution capability of the distribution server apparatus 4, and the desired reception time period of the requesting terminal apparatus. This can ensure that each terminal apparatus receives the distribution of demo data corresponding to its request at the distribution schedule time.

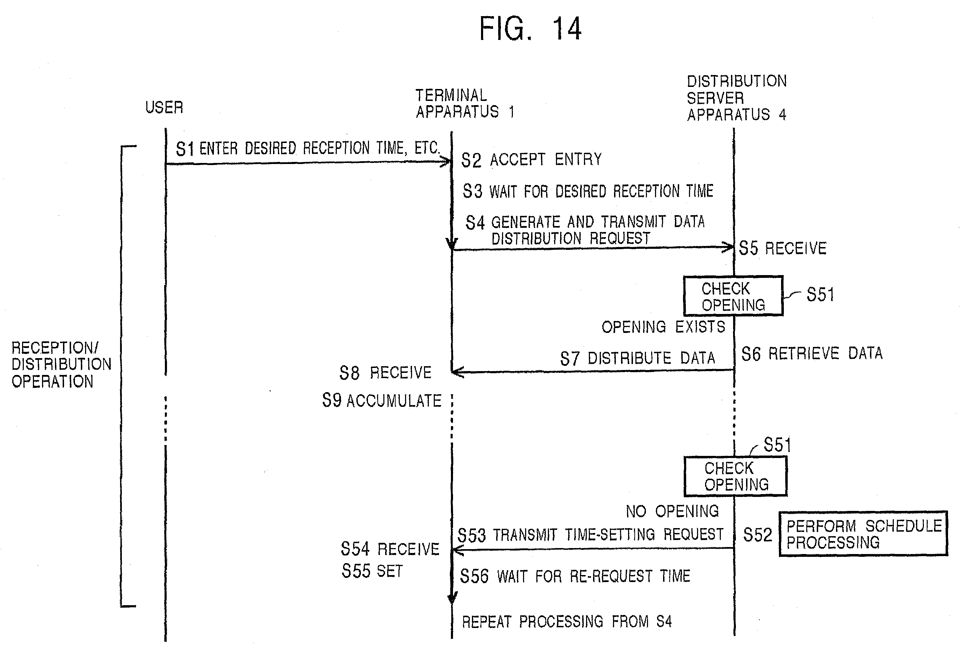

FIG. 14 is a sequence diagram illustrating the fourth example of the operation of the information distribution system in the present embodiment. As shown in FIG. 14, the processing of the user's entry of the desired reception time and so on of distribution data, the detection of arrival of the desired reception time, the generation and transmission of the distribution request, and the retrieval and loading of the distribution request by the distribution server apparatus 4, i.e., processing from step S1 to step S5, is analogous to the processing from step S1 to step S5 in the first example illustrated in FIG. 6.

In the case of the fourth example, as shown in FIG. 14, when the distribution server apparatus 4 receives the distribution request, in step S51, the schedule-processing section 46 checks whether not there is an opening in the schedule and whether or not demo data can be immediately distributed, in accordance with schedule information in the schedule file 47.

When it is confirmed in the schedule-opening check processing in step S51 that there is an opening in the schedule and demo data can be immediately distributed, the schedule-processing section 46 sends a notification indicating the confirmation to the control section 400. As in the first example illustrated in FIG. 6, in step S6, the control section 400 of the distribution server apparatus 4 retrieves requested demo data from the demo-data file 42, in response to the distribution request from the terminal apparatus. In step S7, the control section 400 transmits the retrieved demo data to the requesting terminal apparatus 1.

In step S8, the terminal apparatus 1 receives the demo data, i.e., distribution data, from the distribution server apparatus 4, as in the first example illustrated in FIG. 6. In step S9, the terminal apparatus 1 records and accumulates the distribution data in the storage medium of the storage device section 12.

On the other hand, when it is confirmed in the schedule-opening check processing in step S51 that there is no opening in the schedule and demo data cannot be immediately distributed. In S52, by considering the schedule information in the schedule file 47, the distribution capability of the distribution server apparatus 4, and the desired reception time period of the requesting terminal apparatus 1, the schedule-processing section 46 performs schedule processing for securing time for distributing demo data, corresponding to the request, to the requesting terminal apparatus 1.

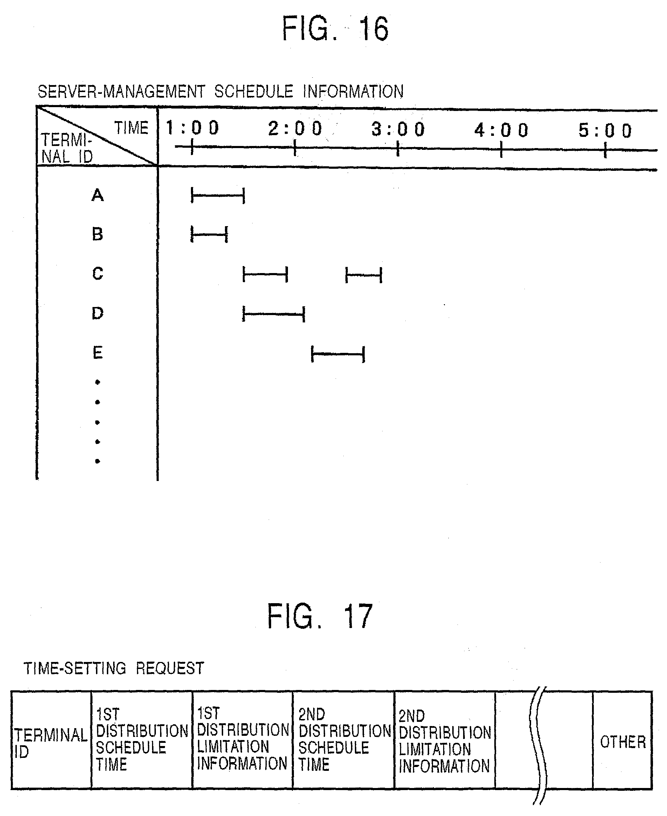

In the schedule processing in step S52, for example, as shown in FIG. 16, in response to a distribution request from each terminal apparatus, the distribution server apparatus 4 sets distribution schedule time and a distribution time period corresponding to the amount of requested demo data, while maintaining the amount of processing within its own distribution capability.

In the case of the example shown in FIG. 16, the distribution of demo data to terminal apparatus A is scheduled for about 30 minutes (distribution time period) from 1 a.m. (distribution schedule time), and the distribution of demo data to terminal apparatus B is scheduled for about 20 minutes from 1 a.m. The distribution of demo data to terminal apparatus C is scheduled for about 25 minutes from 1:30 a.m. and the distribution of demo data to terminal apparatus D is scheduled for about 35 minutes from 1 a.m.

For each time period, scheduling is performed so that demo data are not distributed to terminal apparatuses more than a predetermined number of apparatuses. That is, in the case of this example, based on schedule information as shown in FIG. 16, the presence/absence of an opening in the schedule is checked and distribution schedule time (i.e., a distribution-start schedule time point) and a distribution time period (i.e., a required distribution time period) are set for a terminal apparatus that has transmitted a distribution request.

In step S53 shown in FIG. 14, the distribution server apparatus 4 generates a time-setting request for requesting that the distribution schedule time, which is set as described above, be set as re-request time, and transmits the time-setting request to the terminal apparatus 1 of the distribution requesting end.

In step S54, the terminal apparatus 1 receives the time-setting request from the distribution server apparatus 4. In step S55, in accordance with the time-setting request, the terminal apparatus 1 sets and stores time (re-request time) for transmitting a next demo-data distribution request in its own EEPROM 104. Thereafter, in step S56, the terminal apparatus 1 enters a wait state until the re-request time set in step S55 is reached. When the re-request time is reached, the processing from step S4, i.e., the processing in which a demo-data distribution request is generated and is transmitted to the distribution server apparatus 4, is repeated.

As described above, in addition to the basic processing illustrated in FIG. 6, the operation of the fourth example (illustrated in FIG. 14) of the information distribution system includes the schedule-opening check processing in step S51, the schedule processing in step S52 which is performed when it is determined in the schedule-opening check processing in step S51 that there is no opening in the schedule, and the processing in step S53 in which a time-setting request based on distribution schedule time set in the schedule processing is transmitted. Further, as the processing performed by the terminal apparatus, the operation of the fourth example includes the processing in step S54 in which the time-setting request is received and the processing in step S55 in which re-request time is set.

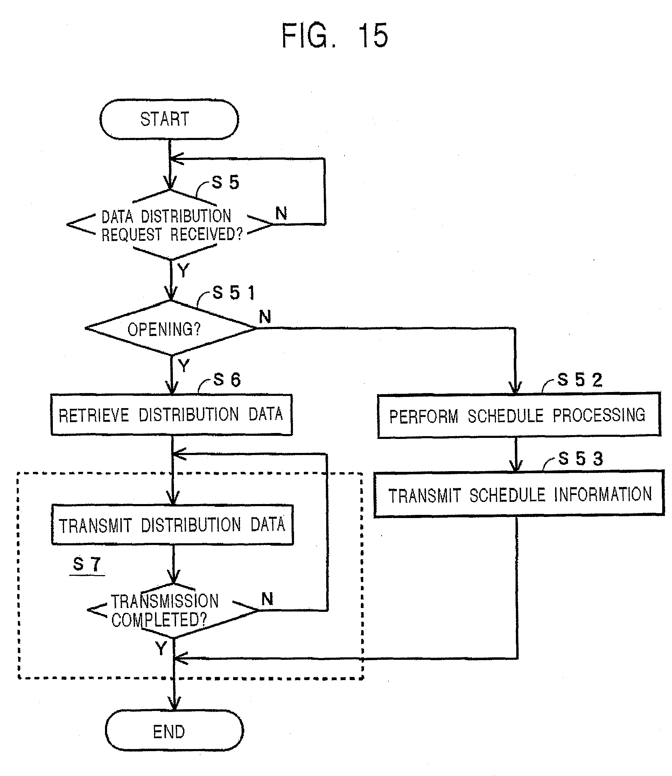

FIG. 15 is a flow chart illustrating the processing of the distribution sever apparatus 4 in the fourth example. As in processing B shown in FIG. 7 which is performed by the distribution server apparatus 4, in step S5, the distribution server apparatus 4 in forth example waits for the transmission of a distribution request from the terminal apparatus 1. When the distribution server apparatus 4 receives a distribution request, in step S51, the schedule-processing section 46 refers to schedule information in the schedule file 47, to thereby check whether or not there is an opening in the schedule and whether or not demo data can be immediately distributed.

When it is confirmed in step S51 that there is an opening and demo data can be immediately distributed, a notification indicating the confirmation is sent to the control section 400 of the distribution server apparatus 4. In turn, in step S6, the control section 400 retrieves demo data to be distributed, in accordance with the distribution request form the terminal apparatus 1. The control section 400 distributes the retrieved demo data to the requesting terminal apparatus 1 and the processing shown in FIG. 15 ends. The processing in steps S6 and S7 is analogous to the processing performed by the distribution server apparatus 4 in the first example.

On the other hand, when it is confirmed in the check processing in step S51 that there is no opening in the schedule and demo data cannot be immediately distributed, the schedule-processing section 46 of the distribution server apparatus 4 performs schedule-processing in step S52, by considering the schedule information in the schedule file 47, the distribution capability of the distribution server apparatus 4, a desired reception time period of the requesting terminal apparatus, and so on. Specifically, in the schedule processing in step S52, a time period in which demo data can be distributed in a satisfactory manner is set as a time period for distributing demo data to the requesting terminal apparatus. More specifically, distribution schedule time and a distribution time period are set, as described with reference to FIG. 16.

In step S53, the distribution server apparatus 4 transmits a re-request time indicating the schedule distribution time, which is the start time of the distribution time period set in step S52, to the requesting terminal apparatus 1, and opens the communications line for the terminal apparatus 1. Then, the processing shown in FIG. 15 ends.

The processing of the terminal apparatus 1 in the fourth example is substantially the same as the processing of the terminal apparatus in the third example shown in FIG. 11.

As described above, in accordance with the schedule processing performed by the distribution server apparatus 4, distribution schedule time is set and is then set as re-request time at the requesting terminal apparatus. As a result, at the distribution schedule time based on the scheduling of the distribution server apparatus 4, intended demo can be distributed and received.

Further, the distribution server apparatus 4 is adapted to allot a time period in which demo data can be distributed in a satisfactory manner to the requesting terminal apparatus, by considering schedule information in the schedule file 47, the distribution capability of the distribution server apparatus 4, a desired reception time period of the requesting terminal apparatus, and so on. This makes it possible to avoid distribution congestion that results from distribution of demo data to a number of terminal apparatuses which exceeds the distribution capability of the distribution server apparatus 4, so that each terminal apparatus can reliably receive intended distribution data in a satisfactory manner.

When a larger number of terminal apparatuses transmit distribution requests, a continuous distribution time period may not be secured for each terminal apparatus. In such a case, a plurality of discrete time periods may be set as the distribution time. Further, the start time of each time period is set at the corresponding requesting terminal apparatus as its distribution schedule time and also the requesting terminal apparatus is also notified of the amount of demo data that can be distributed in the plurality of time periods.

Specifically, as shown in FIG. 17, the start times of the discrete time periods are set as a first distribution schedule time, a second distribution schedule time, ..., and so and the amounts of demo data that can be distributed at the respective discrete times are set as first distribution limitation information, second distribution limitation information, ..., and so on. Those pieces of information are transmitted as a time-setting request to the terminal apparatus of the distribution requesting end.

After receiving the time-setting request shown in FIG. 17, when the first distribution schedule time arrives, the terminal apparatus is adapted to request the distribution of demo data that has an amount of data corresponding to the first distribution limitation information, and when the second distribution schedule time arrives, the terminal apparatus is adapted to request the distribution of demo data that has an amount of data corresponding to the second distribution limitation information and that corresponds to remaining data that has not been requested. Thus, the terminal apparatus is adapted to distinctively manage demo data that was requested for distribution and has been received and demo data that is to be subsequently requested for distribution.

With this arrangement, even when requesting the distribution of a large amount of demo data, the terminal apparatus can reliably receive demo data in a satisfactory manner.

Creating a program that realizes the steps shown in FIG. 15 and installing the program to various types of server apparatus can achieve the distribution server apparatus in the present embodiment.

As described above, the terminal apparatus can receive demo data distributed when the terminal apparatus is not in use. Thus, unlike so-called "real-time preview" in which reproduction is performed for preview simultaneously with distribution, this arrangement makes it possible to distribute high bit-rate demo data without the limitation of a data transfer rate. That is, this arrangement allows the distribution of demo data that can be reproduced with a high quality, thereby achieving preview of a piece of music with high-quality sound.

Additionally, accumulating demo data during the so-called "unoccupied time", in which the terminal apparatus is not used, allows demo data to be promptly reproduced without being unaffected by the distribution processing. Thus, the user can select his/her favorite piece of music when he/she likes to. Furthermore, since high bit-rate demo data can be downloaded, the user can preview a piece of music with high-quality sound, which thus urges the user to download (i.e., purchase) the content of one complete piece of music corresponding to the demo data. That is, it is possible to distribute demo data that is highly appealing (i.e., has highly appealing power) to the user.

As can be understood from the foregoing description, in each terminal apparatus in the illustrated embodiment, accepting means is realized by the key operation section 18, current-time providing means is realized by the clock circuit 21, detecting means and schedule-time detecting means are realized by the control section 100, request-transmitting means is mainly realized by the communication section 11, information receiving means and schedule-time receiving means is realized by the communication section 11, storing means is realized by the storage device section 12, communication-state detecting means is realized by the control section 100 and the communication section 11, controlling means is realized by the control section 100, communication-state detecting means is realized by the control section 400 and the communication section 41, controlling means is realized by the control section 400, and managing means is realized by the control section 400.

In the distribution server apparatus in the illustrated embodiment, distribution-information accumulating means is realized by the demo-data file 42 and the content file 43, request-receiving means is realized by the communication section 41, retrieving means is realized by the control section 400, information transmitting means and schedule-time transmitting means are mainly realized by the communication section 41, and schedule processing means is realized by the schedule-processing section 46 and the schedule file 47.

Although a case in which demo data is distributed and received has been described by way of example in the illustrated embodiment, the present invention is not limited thereto. For example, music data for a single piece of music can be distributed and received in a similar manner.

Although the distribution of demo data is requested using the registration date, genre, artist name, and so on of demo data in the above-described example, the present invention is not limited thereto. As briefly described above, for example, the arrangement may be such that the user receives an at-a-glance list of distributable demo data from the distribution server apparatus 4 to specify demo data he or she wishes to receive based on the list. In this case, the arrangement may also be such that the user specifies demo data he or she wishes to receive, using an identification number or the like given to each piece of demo data on the at-a-glance list.

Prior to the transmission of a distribution request, the distribution server apparatus 4 may perform authentication processing on an accessing terminal apparatus. In this case, only when the user of the terminal apparatus is authenticated, the terminal apparatus can perform subsequent processing, such as the generation and the transmission of a distribution request.

In addition, when the distribution server apparatus 4 does not have requested demo data because of the deletion thereof, the distribution server apparatus 4 may issue a warning, such as providing a message "the requested data is not available."

Further, in addition to music data, the present invention is applicable to the distribution of various other data, such as moving-image data, still-image data, text data, and program data.

More specifically, for example, the present invention is applicable to the distribution of moving-image data, such as dramas and movies; the distribution of still-image data, such as photo albums and picture collections; the distribution of text data, such as novels and papers; and the distribution of program data, such as various application programs. Naturally, the present invention is also applicable to the distribution of a combination of different types of data, such as the distribution of movie data and audio data and the distribution of still-image data and audio data.

For the distribution of so-called "sample data", such as part of a movie or drama, part of a photo album or picture collection, part of a novel or paper, or a trial version of a program, it is possible to distribute such sample data at a high bit rate in an unoccupied time of each terminal apparatus, as in the case of the above-described distributing music demo data. Thus, the present invention can distribute a sample data that is highly appealing to the user and can eliminate the user's unwanted wait time for reception of data.

Although the illustrated embodiment has been described in conjunction with the so-called "wide-area communications network", such as a public telephone network or the Internet, the present invention is not limited thereto. For example, a personal computer that is connected to a LAN (local area network) provided at home may be used as the distribution server apparatus to distribute music data or the like to terminal apparatuses, such as a dedicated terminal, a mobile terminal, and a personal computer which are connected to the LAN and are provided in rooms.

Such an arrangement can advantageously be used in a case in which content (e.g., music data and image data) that is centrally managed by the distribution server apparatus is downloaded to each terminal apparatus and is used as required. Additionally, the present invention is applicable to various applications, such as a case in which intended music data is downloaded during sleep and is reproduced to act as the so-called alarm when preset time is reached, and thus can expand the region of application of a home network.

## Claims

1. An information distribution system in which, in accordance with a request from at least one terminal apparatus connected to a distribution server apparatus through a communications network, the distribution server apparatus distributes distribution information to the requesting terminal apparatus,
wherein the terminal apparatus comprises:
accepting means for accepting entry of information for specifying desired distribution time;
current-time providing means for providing current time;
detecting means for detecting arrival of the desired distribution time, in accordance with the desired-distribution-time specifying information accepted by the accepting means and the current time provided by the current-time providing means;
request-transmitting means for generating a distribution request and transmitting the distribution request to the distribution server apparatus through the communications network, when the detecting means detects the arrival of the desired distribution time;
information-receiving means for receiving distribution information transmitted from the distribution server apparatus; and
storing means for storing the distribution information received by the information-receiving means; and
wherein the distribution server apparatus comprises:
distribution-information accumulating means for accumulating distributable information;
request-receiving means for receiving the distribution request from the terminal apparatus;
retrieving means for retrieving distribution information to be distributed from the distribution-information accumulating means, in accordance with the distribution request received via the request-receiving means; and
information-transmitting means for transmitting the distribution information retrieved by the retrieving means to the terminal apparatus through the communications network.

2. The information distribution system according to claim 1, wherein the terminal apparatus comprises communication-state detecting means for detecting a state of communication with the distribution server apparatus connected through the communications network, when the detecting means detects the arrival of the desired distribution time; and controlling means for controlling the request-transmitting means to transmit the distribution request, when the communication-state detecting means detects that the communication state is satisfactory.

3. The information distribution system according to claim 2, wherein the controlling means of the terminal apparatus adjusts, at least, an amount of distribution information to be requested for distribution, in accordance with a result of the detection performed by the communication-state detecting means.

4. The information distribution system according to claim 1, 2 or 3 wherein the distribution server apparatus further comprises communication-state detecting means for detecting a state of communication with the terminal apparatus connected through the communications network, when the distribution request from the terminal apparatus is received via the request-receiving means; and controlling means for controlling the retrieving means and the information-transmitting means to retrieve distribution information corresponding to the request and to transmit the retrieved distribution information to the requesting terminal apparatus, when the communication-state detecting means detects that the communication state is favorable.

5. The information distribution system according to claim 4, wherein the controlling means of the distribution server apparatus adjusts an amount of distribution information to be distributed to the requesting terminal apparatus, in accordance with a result of the detection performed by the communication-state detecting means; and wherein the terminal apparatus further comprises managing means for managing a difference between requested distribution information and distribution information supplied from the distribution server apparatus and received via the information-receiving means, and the request-transmitting means of the terminal apparatus generates a request for supply of distribution information corresponding to the difference managed by the managing means and transmits the request for supply.

6. The information distribution system according to any one of the preceding claims, wherein the terminal apparatus further comprises schedule-time receiving means for receiving distribution schedule time from the distribution server apparatus; and schedule-time detecting means for detecting arrival of the distribution schedule time in accordance with the distribution schedule time received via the schedule-time receiving means and the current time provided by the current-time providing means; wherein the request-transmitting means of the terminal apparatus generates a distribution request and transmits the distribution request to the distribution server apparatus through the communications network, when the schedule-time detecting means detects the arrival of the distribution schedule time; and wherein the distribution server apparatus further comprises schedule processing means for creating, when the distribution request from the terminal apparatus is received via the request-receiving means, a distribution schedule considering a distribution request from another terminal apparatus; and schedule-time transmitting means for transmitting distribution schedule time based on the distribution schedule created by the schedule processing means to the requesting terminal apparatus.

7. A terminal apparatus which is connected to a distribution server apparatus through a communications network and which receives distribution information that is distributed from the distribution server apparatus in accordance with a request from the terminal apparatus, wherein the terminal apparatus comprises:
accepting means for accepting entry of information for specifying desired distribution time;
current-time providing means for providing current time;
detecting means for detecting arrival of the desired distribution time, in accordance with the desired-distribution-time specifying information accepted by the accepting means and the current time provided by the current-time providing means;
request-transmitting means for generating a distribution request and transmitting the distribution request to the distribution server apparatus through the communications network, when the detecting means detects the arrival of the desired distribution time;
information-receiving means for receiving distribution information transmitted from the distribution server apparatus; and
storing means for storing the distribution information received by the information-receiving means.

8. The terminal apparatus according to claim 7, further comprising communication-state detecting means for detecting a state of communication with the distribution server apparatus connected through the communications network, when the detecting means detects the arrival of the desired distribution time; and controlling means for controlling the request-transmitting means to transmit the distribution request, when the communication-state detecting means detects that the communication state is satisfactory.

9. The terminal apparatus according to claim 8, wherein the controlling means adjusts, at least, an amount of distribution information to be requested for distribution, in accordance with a result of the detection performed by the communication-state detecting means.

10. The terminal apparatus according to claim 9, wherein the distribution server apparatus adjusts a distribution amount of requested distribution information in accordance with the state of communication with the terminal apparatus connected through the communications network; and wherein the terminal apparatus further comprises managing means for managing a difference between the requested distribution information and distribution information supplied from the distribution server apparatus and received via the information-receiving means, and the request-transmitting means is capable of generating a request for supply of distribution information corresponding to the difference managed by the managing means.

11. The terminal apparatus according to any one of claims 7 to 10, wherein the distribution server apparatus transmits distribution schedule time to the requesting terminal apparatus, based on a distribution schedule corresponding to a distribution request from another terminal apparatus; and wherein the terminal apparatus further comprises schedule-time receiving means for receiving the distribution schedule time from the distribution server apparatus and schedule-time detecting means for detecting arrival of the distribution schedule time in accordance with the distribution schedule time received by the schedule-time receiving means and the current time provided by the current-time providing means, and the request-transmitting means is capable of generating a distribution request and transmitting the distribution request to the distribution server apparatus through the communications network, when the schedule-time detecting means detects the arrival of the distribution schedule time.

12. A distribution server apparatus that is connected to at least one terminal apparatus through a communications network and that distributes, in accordance with a request from the terminal apparatus, distribution information to the requesting terminal apparatus, the distribution server apparatus comprising:
distribution-information accumulating means for accumulating distributable information;
request-receiving means for receiving distribution request from the terminal apparatus;
communication-state detecting means for detecting a state of communication with the terminal apparatus connected through the communications network, when the distribution request from the terminal apparatus is received via the request-receiving means;
retrieving means for retrieving, when the communication-state detecting means detects that communication state is satisfactory, distribution information to be distributed from the distribution-information accumulating means, in accordance with the distribution request received via the request-receiving means; and
information-transmitting means for transmitting the distribution information retrieved by the retrieving means to the terminal apparatus through the communications network.

13. The distribution server apparatus according to claim 12, wherein the retrieving means comprises controlling means for controlling an amount of distribution information to be distributed to the requesting terminal apparatus, in accordance with a result of the detection performed by the communication-state detecting means.

14. The distribution server apparatus according to claim 12 or 13, further comprising schedule processing means for creating, when the distribution request from the terminal apparatus is received via the request-receiving means, a distribution schedule considering the distribution request from another terminal apparatus; and schedule-time transmitting means for transmitting distribution schedule time based on the distribution schedule created by the schedule processing means to the requesting terminal apparatus.

15. An information distribution method for causing a distribution server apparatus to distribute distribution information to at least one terminal apparatus in accordance with a request from the terminal apparatus, the distribution server apparatus and the terminal apparatus being connected through a communications line,
wherein the information distribution method comprises, at the terminal apparatus:
an accepting step of accepting entry of information for specifying desired distribution time;
a detecting step of detecting arrival of the desired distribution time, in accordance with current time and the information specifying the desired distribution time; and
a request-transmitting step of generating a distribution request and transmitting the distribution request to the distribution server apparatus through the communications network, when it is detected in the detecting step that the desired distribution time arrives;
an information-receiving step of receiving distribution information transmitted from the distribution server apparatus; and
a storing step of storing the distribution information received in the information-receiving step in a storage medium; and
wherein the information distribution method comprises, at the distribution server apparatus:
a distribution-information accumulating step of accumulating distributable information;
a request-receiving step of receiving the distribution request from the terminal apparatus;
a retrieving step of retrieving distribution information to be distributed from the distribution-information stored in the storage medium, in accordance with the distribution request received in the request-receiving step; and
an information transmitting step of transmitting the distribution information retrieved in the retrieving step to the terminal apparatus through the communications network.

16. The information distribution method according to claim 15, wherein the information distribution method comprises, at the terminal apparatus, a communication-state detecting step of detecting a state of communication with the distribution server apparatus connected through the communications network, when it is detected in the detecting step that the desired distribution time arrives; and wherein, when it is detected in the communication-state detecting step that the communication state is satisfactory, the distribution request is transmitted in the request-transmitting step.

17. The information distribution method according to claim 16, wherein, in the request-transmitting step performed at the terminal apparatus, at least, an amount of distribution information to be requested for distribution is adjusted in accordance with a result of the detection in the communication-state detecting step.

18. The information distribution method according to any one of claims 15 to 17, further comprising, at the distribution server apparatus, a communication-state detecting step of detecting a state of communication with the terminal apparatus connected through the communications network, when the distribution request from the terminal apparatus is received in the request-receiving step; wherein, when it is detected in the communication-state detecting step that the communication state is favorable, distribution information corresponding to the request is retrieved in the retrieving step and the retrieved distribution information is transmitted to the requesting terminal apparatus in the information transmitting step.

19. The information distribution method according to claim 18, wherein, in the information transmitting step performed at the distribution server apparatus, an amount of distribution information to be distributed to the requesting terminal apparatus is adjusted in accordance with a result of the detection in the communication-state detecting step; wherein the information distribution method further comprises, at the terminal apparatus, a managing step of determining and managing a difference between requested distribution information and distribution information supplied from the distribution server apparatus and received in the information-receiving step, and a re-requesting step of generating a request for supply of distribution information corresponding to the difference managed in the managing step and transmitting the request for supply.

20. The information distribution method according to any one of claims 15 to 19, further comprising, at the terminal apparatus, a schedule-time receiving step of receiving distribution schedule time from the distribution server apparatus; a schedule-time detecting step of detecting arrival of the distribution schedule time, in accordance with current time and the distribution schedule time received in the schedule-time receiving step; and a re-requesting step of generating a distribution request and transmitting the distribution request to the distribution server apparatus through the communications network, when it is detected in the schedule-time detecting step that the distribution schedule time arrives; and the information distribution method further comprising, at the distribution server apparatus, a schedule processing step of creating, when the distribution request from the terminal apparatus is received in the request-receiving step, a distribution schedule considering the distribution request from another terminal apparatus; and a schedule-time transmitting step of transmitting distribution schedule time based on the distribution schedule created in the schedule processing step to the requesting terminal apparatus.

21. A program for at least one terminal apparatus that is connected to a distribution server apparatus through a communications network and that receives distribution information distributed from the distribution server apparatus, each terminal apparatus implemented by a computer and the program being executed by the computer, the program comprising:
an accepting step of accepting entry of information for specifying desired distribution time;
a detecting step of detecting arrival of the desired distribution time, in accordance with current time and the desired-distribution-time specifying information accepted in the accepting step;
a request-transmitting step of generating a distribution request and transmitting the distribution request to the distribution server apparatus through the communications network, when it is detected in the detecting step that the desired distribution time arrives;
an information-receiving step of receiving distribution information transmitted from the distribution server apparatus; and
a storing step of storing the distribution information received in the information-receiving step in a storage medium.

22. The program according to claim 21, further comprising a communication-state detecting step of detecting a state of communication with the distribution server apparatus connected through the communications network, when it is detected in the detecting step that the desired distribution time arrives, wherein when it is detected in the communication-state detecting step that the communication state is satisfactory, the distribution request is transmitted in the request-transmitting step.

23. The program according to claim 22, wherein, in the request-transmitting step, at least, an amount of distribution information to be requested for distribution is adjusted in accordance with a result of the detection in the communication-state detecting step.

24. The program according to claim 23, wherein the distribution server apparatus adjusts a distribution amount of requested distribution information in accordance with the state of communication with the terminal apparatus connected through the communications network; and wherein the program further comprises a managing step of determining and managing a difference between requested distribution information and distribution information supplied from the distribution server apparatus and received in the information-receiving step and, a re-requesting step of generating a request for supply of distribution information corresponding to the difference managed in the managing step and transmitting the request for supply.

25. The program according to any one of claims 21 to 24, wherein the distribution server apparatus transmits distribution schedule time based on a distribution schedule considering a distribution schedule based on a distribution request from another terminal; and wherein the program further comprises a schedule-time receiving step of receiving the distribution schedule time from the distribution server apparatus; a schedule-time detecting step of detecting arrival of the distribution schedule time, in accordance with current time and the distribution schedule time received in the schedule-time receiving step; and a re-requesting step of generating a distribution request and transmitting the distribution request to the distribution server apparatus through the communications network, when it is detected in the schedule-time detecting step that the distribution schedule time arrives.
